# EUROPEAN PATENT APPLICATION

(11) **EP 4 749 156 A1**
(43) Date of publication of application: **27.05.2026**
(21) Application number: 24844670.0
(22) Date of filing: 16.07.2024
(51) Int. Cl.: F16F 9/34

(54) **DAMPING VALVE AND HYDRAULIC DAMPER USING SAME**

(30) Priority: 21.07.2023 CN 202310905333; 01.08.2023 CN 202310957144
(71) Applicant: Ningbo Dingqu Automotive Technology Co., Ltd., Ninghai County Ningbo, Zhejiang 315000 (CN)
(72) Inventor: LOU, Yongchan, Ningbo, Zhejiang 315000 (CN)
(74) Representative: Meyer-Dulheuer MD Legal Patentanwälte PartG mbB
(86) International application number: PCT/CN2024/105762
(87) International publication number: WO 2025/020978

(57) **Abstract**

A damper valve and a hydraulic damper using the same are provided. The damper valve includes a damper valve assembly (100) and a valve body (200). The damper valve assembly (100) includes a main valve sleeve (1), a main valve spool (2), and a first elastic member (3). The main valve spool (2) is inserted in a mounting bore (101) of the main valve sleeve (1). The main valve spool (2) is movable along an axial direction of the main valve sleeve (1). A gap formed between the main valve spool (2) and an opening (1011) of the mounting bore (101) is configured as a first flow path. A side wall of the mounting bore (101) is provided with a first passage (102). The first flow path is in communication with the first passage (102). A first side cavity (103) is formed between the main valve spool (2) and an inner wall of the mounting bore (101). The first passage (102) is in communication with the first side cavity (103).

## Description

### CROSS-REFERENCE TO RELATED APPLICATIONS

The present application claims priority to Chinese patent application No. 202310957144.5, filed on August 1, 2023, and titled "DAMPER VALVE AND HYDRAULIC DAMPER USING THE SAME", and Chinese patent application No. 202310905333.8, filed on July 21, 2023, and titled "DAMPER VALVE AND HYDRAULIC DAMPER USING THE SAME". The contents of the above identified applications are hereby incorporated herein in their entireties by reference.

### TECHNICAL FIELD

The present disclosure relates to the technical field of hydraulic dampers, and in particular, to a damper valve and a hydraulic damper using the same.

### BACKGROUND

A hydraulic damper is a vibration damper and, equivalently, a shock absorber. In addition to vehicular suspension systems, such hydraulic dampers are employed in operator cabs, seats, and steering wheels. The hydraulic dampers may also be used as buffers on vehicle bumpers. The hydraulic dampers also have use in other vibration-damping and energy-dissipation applications spanning aerospace, aviation, defense, ordnance, and civil-engineering structures including, without limitation, buildings, bridges, and rail infrastructure.

In a vehicle suspension system, vibrations are generated when elastic elements are impacted, leading to relative motion between a vehicle axle (or a vehicle wheel) and a vehicle frame (or a vehicle body). In order to suppress the relative motion between the vehicle axle and the vehicle frame, rapidly dissipate vibrational energy, and improve vehicle running smoothness (ride comfort), a hydraulic shock absorber can be installed in parallel with the elastic elements in the suspension system. The operating principle of the hydraulic shock absorber is that when the relative motion occurs due to vibration between the vehicle axle and the vehicle frame, a piston-rod assembly in the shock absorber also reciprocates in a shock absorber cavity. The oil in the shock absorber cavity is thus forced to repeatedly flow from one cavity to another through various orifices in a damper valve. In this process, a damping force against vibration may be formed due to friction between orifice walls and the oil, as well as internal friction among oil molecules. Thus, mechanical vibration energy is converted into heat energy, which is then absorbed by the oil and the shock absorber and dissipated into the atmosphere. With factors such as the cross-section area of the oil passage remaining constant, the damping force increases or decreases with the relative velocity between the vehicle axle and the vehicle frame and is also related to oil viscosity.

Currently, existing damper valves offer limited precision and range of regulation, failing to provide a comfortable driving experience. The operational characteristics of the existing damper valves lack multi-stage and multi-state regulation capabilities. For example, the existing damper valves can only regulate between a throttling state or an overflow state, and cannot achieve the multi-stage and multi-state regulation capabilities. Consequently, a flow rate-pressure curve of the damper valve is difficult to approximate a required ideal curve, adversely affecting the driving comfort of a user.

The handling stability of an automobile is a crucial indicator for evaluating performance of the automobile. The handling stability of the automobile is related to vehicle's center of gravity height and speed. A height of the vehicle body is determined by a suspension system of the vehicle. However, in a suspension system employing the shock absorber, the height of the vehicle body is relatively determined by the height of the shock absorber, so that vehicle's center of gravity height is indirectly affected. Therefore, the height of the shock absorber is typically subject to constraints.

### SUMMARY

The present disclosure provides a damper valve and a hydraulic damper using the same.

A damper valve is provided, including a damper valve assembly and a valve body. The valve body is provided with an oil passage for oil inlet and outlet, and the damper valve assembly includes a main valve sleeve, a main valve spool, and a first elastic member. The main valve sleeve is provided with a mounting bore. An upper end of the mounting bore is provided with an opening. A side wall of the mounting bore is provided with a first passage, and the first passage is in communication with the oil passage. The main valve spool is inserted in the mounting bore of the main valve sleeve. The main valve spool is movable along an axial direction of the main valve sleeve. A gap formed between the main valve spool and the opening of the mounting bore is configured as a first flow path. The first flow path is in communication with the first passage, and the main valve spool is further provided with a through hole. A first side cavity is formed between the main valve spool and an inner wall of the mounting bore. The first passage is in communication with the first side cavity.

The first elastic member is configured to apply an elastic force to the main valve spool along an axial direction of the main valve spool.

A hydraulic damper is provided, including a shock absorber and the damper valve. The shock absorber is in communication with the damper valve.

Details of one or more embodiments of the present disclosure are presented in the attached drawings and descriptions below. And other features, purposes and advantages of the present disclosure will become apparent from the description, drawings and claims.

### BRIEF DESCRIPTION OF THE DRAWINGS

For a better description and illustration of embodiments and/or examples of those inventions disclosed herein, reference may be made to one or more attached drawings. Additional details or examples used to describe the drawings should not be considered as limiting the scope of any of the disclosed inventions, currently described embodiments and/or examples, and currently understood best modes of these inventions.
FIG. 1 is a schematic diagram of an assembly structure of a main valve sleeve and a main valve spool according to a first embodiment of the present disclosure.
FIG. 2 is a schematic cross-sectional view of a damper valve assembly according to the first embodiment of the present disclosure.
FIG. 3 is a schematic diagram of an assembly structure of a main valve sleeve and a main valve spool according to a second embodiment of the present disclosure.
FIG. 4 is a schematic cross-sectional view of a damper valve assembly according to the second embodiment of the present disclosure.
FIG. 5 is a schematic diagram of an assembly structure of a main valve sleeve and a main valve spool according to a third embodiment of the present disclosure.
FIG. 6 is a schematic cross-sectional view of a damper valve assembly according to the third embodiment of the present disclosure.
FIG. 7 is a schematic diagram of an assembly structure of a main valve sleeve and a main valve spool according to a fourth embodiment of the present disclosure.
FIG. 8 is a schematic cross-sectional view of a damper valve assembly according to the fourth embodiment of the present disclosure.
FIG. 9 is a schematic diagram of a connecting structure of two damper valve assemblies according to a fifth embodiment of the present disclosure.
FIG. 10 is a schematic diagram of a connecting structure of two damper valve assemblies according to the fifth embodiment of the present disclosure.
FIG. 11 is a schematic structural diagram of two damper valve assemblies provided with disc valves according to the fifth embodiment of the present disclosure.
FIG. 12 is a schematic structural diagram of two damper valve assemblies provided with disc valves according to the fifth embodiment of the present disclosure.

In the drawings, 1 represents a main valve sleeve; 101 represents a mounting bore; 102 represents a first passage; 103 represents a first side cavity; 104 represents a stepped section; 2 represents a main valve spool; 201 represents a through hole; 202 represents a first sealing member; 3 represents a first elastic member; 4 represents a regulating rod; 5 represents a second elastic member; 6 represents a support sleeve; 601 represents a second passage; 602 represents an outer movable cavity; 603 represents an inner movable cavity; 7 represents an auxiliary valve sleeve; 701 represents a support platform; 702 represents an outer cavity; 703 represents a control cavity; 704 represents a second side cavity; 705 represents a third passage; 706 represents a fourth passage; 8 represents an auxiliary valve spool; 801 represents an inner cavity; 802 represents an oil through hole; 803 represents a second sealing member; 9 represents a third elastic member; 10 represents a disc valve; 100 represents a damper valve assembly; 1011 represents an opening; 1012 represents a first groove; 200 represents a valve body; 210 represents an oil passage; 2011 represents a boss structure; 2012 represents a second groove; and 400 represents a regulating assembly.

### DETAILED DESCRIPTION

The technical solutions of the present disclosure are further described below with reference to specific embodiments of the present disclosure in combination with the accompanying drawings, but the present disclosure is not limited to these embodiments.

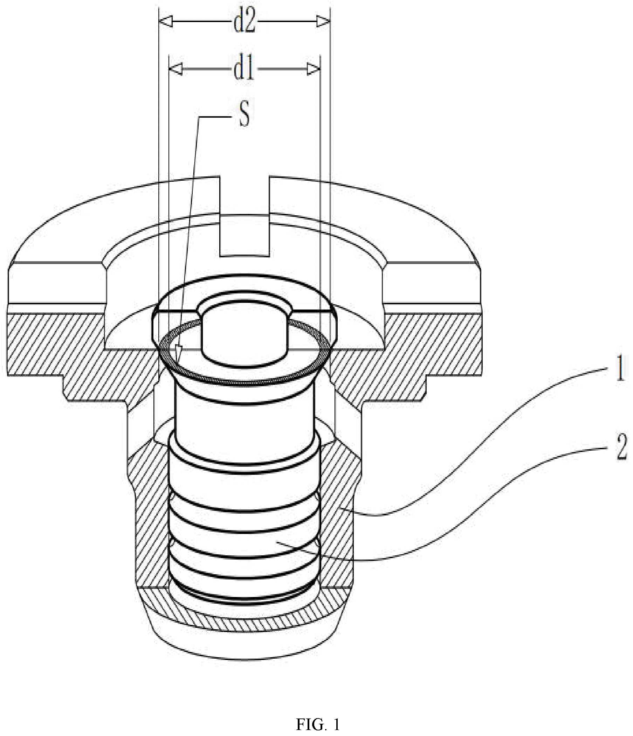

As shown in FIG. 1 to FIG. 8, a damper valve is provided, including a damper valve assembly 100 and a valve body 200. The valve body 200 is provided with an oil passage 210 for oil inlet and outlet, and the damper valve assembly 100 includes a main valve sleeve 1, a main valve spool 2, and a first elastic member 3.

The main valve sleeve 1 is provided with a mounting bore 101. An upper end of the mounting bore 101 is provided with an opening 1011. A side wall of the mounting bore 101 is provided with a first passage 102. The first passage 102 is in communication with the oil passage 210.

The main valve spool 2 is inserted into the mounting bore 101 of the main valve sleeves 1. The main valve spool 2 is movable along an axial direction of the main valve sleeve 1. A gap formed between the main valve spool 2 and the opening 1011 of the mounting bore 101 is configured as a first flow path, and the first flow path is in communication with the first passage 102.

The valve body 200 is provided with an oil passage 210 for oil inlet and outlet. The oil passage 210 may include a first oil passage and a second oil passage. Each of the first oil passage and the second oil passage may be used as the oil inlet or outlet. When the first oil passage is used as oil inlet, the second oil passage may be used for oil outlet. Conversely, when the first oil passage is used for oil outlet, the second oil passage may be used as oil inlet.

The first passage 102 may be disposed obliquely. By arranging the first passage obliquely, an axial size of a damper valve structure can be reduced. Simultaneously, a hydrodynamic direction during oil flow can be guided on a movement axis of the main valve spool to minimize lateral components. This arrangement provides an increased dynamic-response rate and shortened settling time of the main valve spool, and enables the oil to enter or leave the first passage with diminished flow resistance, thereby reducing the oil flow damping and preventing internal clogging, and consequently yielding the damper valve of enhanced operational reliability and stability.

The main valve spool 2 is inserted into the mounting bore 101 and is capable of being displaced along the axial direction of the main valve sleeve 1. The main valve can be selectively configurable in either a normally-closed or a normally-open configuration.

When the main valve is configured to be in the normally-closed state, in an initial state, the opening 1011 of the mounting bore 101 may be closed by the main valve spool 2. At this time, there is no gap formed between the main valve spool 2 and the opening 1011 of the mounting bore 101. As the pressure of the oil entering from the first passage 102 increases, the main valve spool 2 gradually moves away from the opening 1011 of the mounting bore 101. At this time, a gap is formed between the main valve spool 2 and the opening 1011 of the mounting bore 101, and the gap is configured as the first flow path.

When the main valve is configured to be in the normally-open state, in an initial state, a certain gap is formed between the main valve spool 2 and the opening 1011 of the mounting bore 101, and the gap is configured as the first flow path.

After being formed, the first flow path may be in communication with the first passage 102 and the second oil passage. The oil can flow into the second oil passage sequentially through the first passage 102 and the first flow path after entering the first oil passage.

Alternatively, the first elastic member 3 is configured to apply an elastic force to the main valve spool 2 along an axial direction of the main valve spool 2. The main valve spool 2 is further provided with a through hole 201, a first side cavity 103 is formed between the main valve spool 2 and an inner wall of the mounting bore 101, and the first passage 102 is in communication with the first side cavity 103.

Specifically, the main valve spool 2 is provided with a through hole 201, and the through hole 201 serves a pressure balancing function. The through hole 201 allows oil flow along a direction of upper and lower end surfaces of the main valve spool 2, maintaining a balance of oil pressure in the axial direction on the upper and lower end surfaces of the main valve spool 2 during operation of the damper valve.

The first side cavity 103 is formed between the main valve spool 2 and the inner wall of the mounting bore 101. Since the first passage 102 is in communication with the first side cavity 103, oil can flow into the first side cavity 103 from the first passage 102. After the first side cavity 103 is filled with oil, a resulting fluid pressure exerts an upward hydraulic force on the main valve spool 2. As the oil pressure gradually increases, the main valve spool 2 is thereby lifted and displaced axially upward.

When the main valve is configured to be in the normally-closed state, the first elastic member 3 may be disposed above the main valve spool 2. In this way, a downward elastic force may be applied to the main valve spool 2 by the first elastic member 3, so that an upper portion of the main valve spool 2 abuts against the main valve sleeve 1 and closes the opening 1011 of the mounting bore 101.

When the main valve is configured to be in the normally-open state, the first elastic member 3 may be disposed below the main valve spool 2. In this way, an upward elastic force may be applied to the main valve spool 2 by the first elastic member 3, so that a gap is formed between the upper portion of the main valve spool 2 and the opening 1011 of the mounting bore 101, and thus the first flow path is formed.

After being formed, the first flow path is in communication with the first side cavity 103 and the second oil passage. After entering the first oil passage, the oil can flow into the second oil passage sequentially through the first passage 102, the first side cavity 103, and the first flow path.

Alternatively, the upper portion of the main valve spool 2, urged by the first elastic member, abuts against the main valve sleeve 1 so as to close the opening 1011 of the mounting bore 101, or, a gap is formed between the upper portion of the main valve spool 2 and the opening 1011 of the mounting bore 101 via the first elastic member 3 to open the opening 1011 of the mounting bore 101.

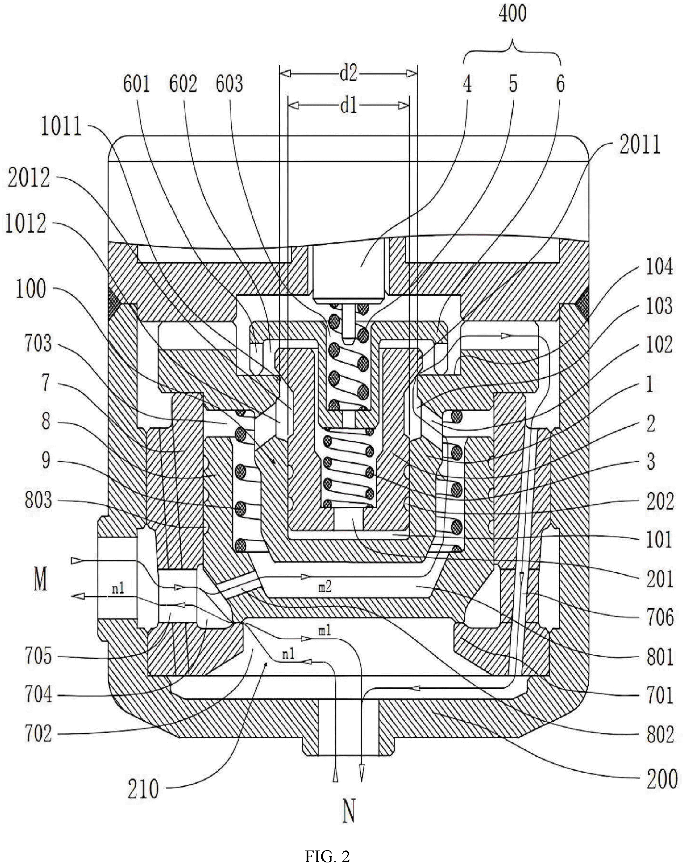

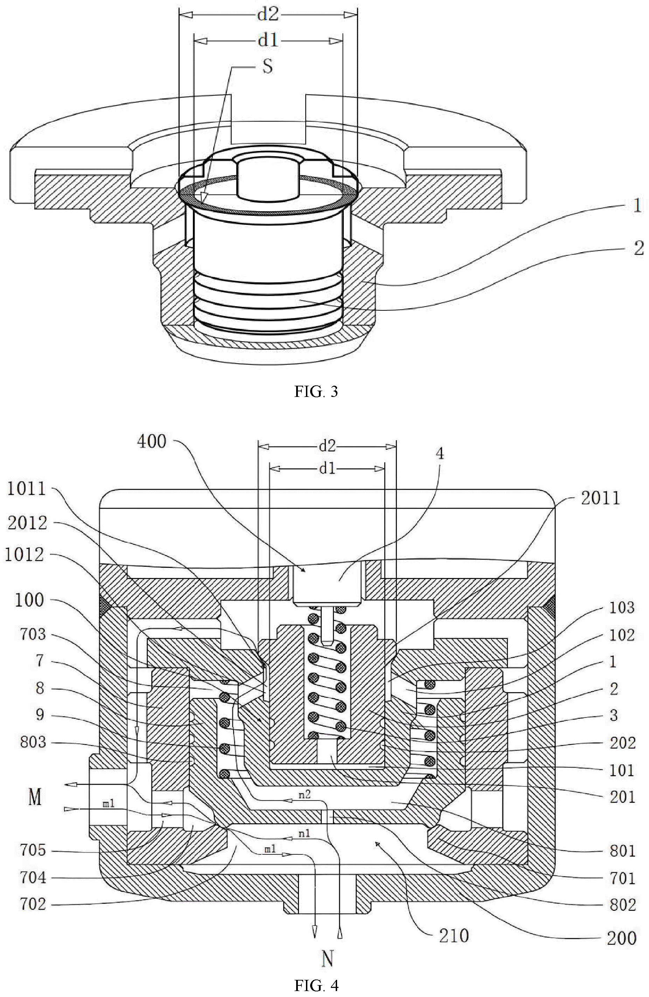

Specifically, as shown in FIG. 2 and FIG. 4, when the main valve is configured to be in the normally-closed state, the first elastic member 3 is disposed above the main valve spool 2. One end of the first elastic member 3 abuts against the main valve spool 2, and another end of the first elastic member 3 abuts against the valve body 200, the support sleeve 6, or a regulating rod 4. A downward elastic force may be applied to the main valve spool 2 by the first elastic member 3, so that the upper portion of the main valve spool 2 can abut against the main valve sleeve 1 and close the opening 1011 of the mounting bore 101. As the pressure of the oil entering the first side cavity 103 gradually increases, the main valve spool 2 is displaced upward and gradually away from the opening 1011 of the mounting bore 101 to form a gap, thereby forming the first flow path.

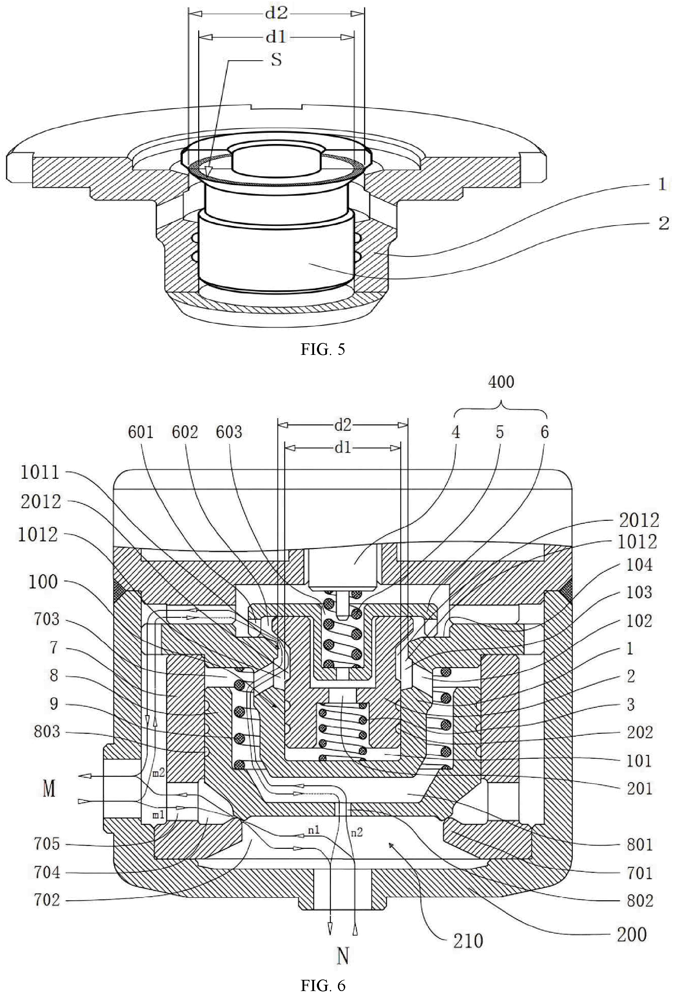

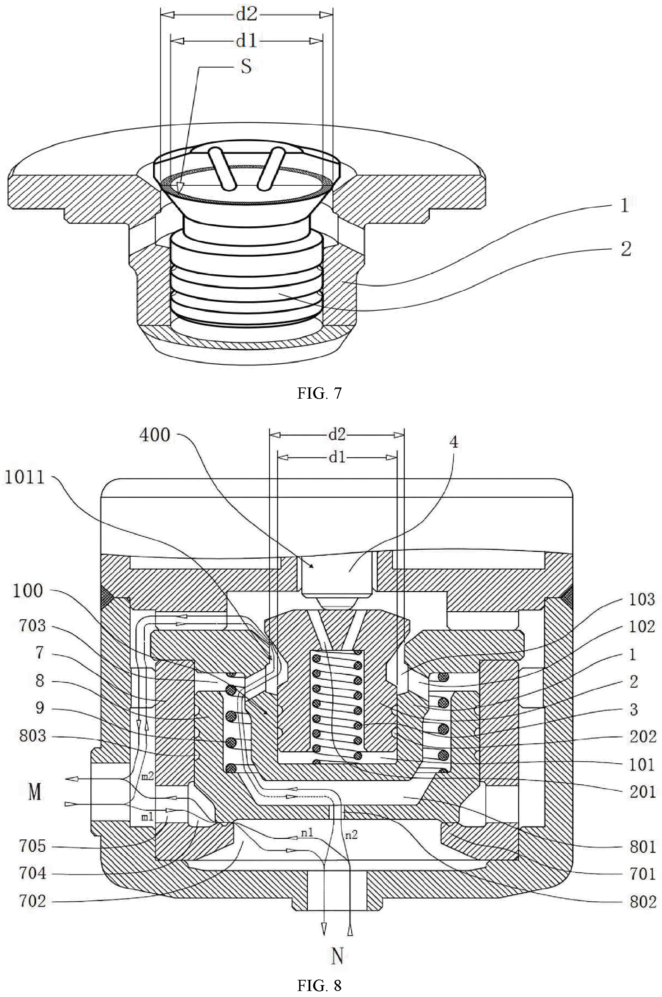

As shown in FIG. 6 and FIG. 8, when the main valve is configured to be in the normally-open state, the first elastic member 3 is disposed below the main valve spool 2. One end of the first elastic member 3 abuts against the main valve spool 2 and another end of the first elastic member 3 abuts against the main valve sleeve 1. An upward elastic force may be applied to the main valve spool 2 by the first elastic member 3, so that a gap is formed between the upper portion of the main valve spool 2 and the opening 1011 of the mounting bore 101 to form a first flow path, that is, the opening 1011 of the mounting bore 101 is opened.

Alternatively, the upper portion of the main valve spool 2 may have a boss structure 2011. The boss structure 2011 may extend out of the mounting bore 101. When the main valve spool 2 is displaced downward to a preset position, the boss structure 2011 may abut against the upper end of the mounting bore 101 and close the opening 1011 of the mounting bore 101.

Specifically, the upper portion of the main valve spool 2 may have a boss structure 2011. A maximum outer size of the boss structure 2011 may be greater than an inner size of the mounting bore 101. The upper end of the mounting bore 101 is provided with an opening 1011, and the boss structure 2011 may extend out of the mounting bore 101. When the main valve spool 2 is displaced downward to a preset position, the boss structure 2011 may abut against the upper end of the mounting bore 101 and close the opening 1011 of the mounting bore 101.

In addition, in one embodiment of the present disclosure, the upper portion of the main valve spool 2 may extend out of the mounting bore 101 and may be higher than the mounting bore 101 when the main valve spool 2 moves. The technical solutions where the upper portion of the main valve spool 2 is not higher than the mounting bore 101 in the initial state should also fall within the protection scope. That is, being installed in the mounting bore 101 is not limited to the entire main valve spool 2 being accommodated within the mounting bore 101. During design, the upper portion of the main valve spool 2 may extend out of the mounting bore 101 and be higher than the mounting bore 101 when the main valve spool 2 moves, or the upper portion of the main valve spool 2 may be disposed to not extend out of the mounting bore 101.

Alternatively, either or both of a first groove 1012 and a second groove 2012 are formed. The first groove 1012 is formed by an upper portion of the inner wall of the mounting bore 101 being recessed outward, and the second groove 2012 is formed by an outer wall of the main valve spool 2 being recessed inward. The first groove 1012 and the second groove 2012 are enclosed to form the first side cavity 103, or the first groove 1012 is configured as the first side cavity 103, or the second groove 2012 is configured as the first side cavity 103.

In one embodiment, a solution for implementing the damper valve according to the present disclosure involves providing only the second groove 2012. It can be understood that in other embodiments, the solution for implementing the damper valve according to the present disclosure may also include a solution for providing the first groove 1012, or a solution in which both the first groove 1012 and the second groove 2012 are provided. Specifically, each of the first groove 1012 and the second groove 2012 may be determined according to shapes of the mounting bore 101 and the main valve spool 2.

It should be noted that the structure of the first side cavity 103 formed in this manner does not occupy extra space, which can further improve space utilization while making the processing and manufacturing process more reasonable.

It should be further noted that in an actual structure, the main valve spool 2 is inserted into the mounting bore 101 of the main valve sleeves 1 and is movable along the axial direction of the main valve sleeve 1. A region between a lower outer wall of the main valve spool 2 and the inner wall of the mounting bore 101 may be configured to be in a sealed state or a non-sealed state. When the region between the lower outer wall of the main valve spool 2 and the inner wall of the mounting bore 101 is configured to be in the sealed state, a diameter formed at a dynamic sealing between the lower outer wall of the main valve spool 2 and the inner wall of the mounting bore 101 may be defined as an operating diameter d1. When the region between the lower outer wall of the main valve spool 2 and the inner wall of the mounting bore 101 is non-sealed, a diameter of the lower outer wall of the main valve spool 2 may be defined as the operating diameter d1. When the main valve spool 2 is displaced downward until the boss structure 2011 of the main valve spool 2 abuts against the upper end of the mounting bore 101, a diameter formed at the abutment may be defined as an operating diameter d2. An annular cross-section formed on the main valve spool 2, which is a cross-section defined by the operating diameter d2 minus a cross-section defined by the operating diameter d1, is referred to as an operating cross-section S of the main valve spool 2. The specific sizes of the operating diameter d1 and the operating diameter d2 may be designed according to actual functional requirements. When the operating diameter d2 is designed as being greater than the operating diameter d1, i.e., an area of the operating cross-section S is greater than zero, during operation, when a pressure difference is generated since the oil pressure inside the first side cavity 103 is greater than that outside the first side cavity 103, an opening force for upward displacement of the main valve spool 2 may be generated by the operating cross-section S under the action of the pressure difference. When a pressure difference is generated since the oil pressure outside the first side cavity 103 is greater than that inside the first side cavity 103, a closing force for downward displacement of the main valve spool 2 may be generated by the operating cross-section S under the action of the pressure difference.

In the present embodiment, the area of the operating cross-section S of the main valve spool 2 is formed by a difference between the cross-section area defined by the operating diameter d2 and the cross-section area defined by the operating diameter d1. Due to this structural feature, the relatively large operating diameter d2 and operating diameter d1 may be selected in practical applications to obtain a very small area for the operating cross-section S. In addition, the operating cross-section S of various specifications can be configured conveniently and accurately only by modifying the operating diameter d2 or the operating diameter d1.

Alternatively, the main valve spool 2 may be disposed between the main valve sleeve 1 and the regulating assembly 400. The regulating assembly 400 may include a regulating rod 4 disposed above the main valve spool 2.

Alternatively, the first elastic member 3 may be located between the main valve spool 2 and the regulating rod 4. One end of the first elastic member 3 may abut against the main valve spool 2, and another end of the first elastic member 3 may abut against the regulating rod 4.

Specifically, as shown in FIG. 4, initially, the main valve spool 2 is displaced downward under the elastic force of the first elastic member 3, so that the boss structure 2011 of the main valve spool 2 may abut against the upper end of the mounting bore 101 and close the opening 1011 of the mounting bore 101. Thus, the main valve is in the normally-closed state. The regulating rod 4 can be moved up and down along an axial direction of the regulating rod 4 in an electric control manner, and thus the axial position adjustment of the regulating rod 4 can be achieved. Thereby, the elastic force applied by the first elastic member 3 to the main valve spool 2 can be adjusted. The regulating rod 4 can be configured as having a self-locking structure or a non-self-locking structure. Specifically, when the regulating rod 4 is configured as having the self-locking structure, when an external axial force is applied to the regulating rod 4, the regulating rod 4 cannot move along the direction of the externally applied force and remains at the adjusted position. When the regulating rod 4 is configured as having the non-self-locking structure, a position holding force for the axial position of the regulating rod 4 may further be set in an electric control manner or having a preset force value. When an external axial force applied to the regulating rod 4 is less than or equal to the set position holding force, the regulating rod 4 can be maintained at the adjusted axial position. When the external axial force applied to the regulating rod 4 is greater than the set position holding force, the regulating rod 4 can move along the direction of the applied force.

During operation, when the oil enters from the first oil passage and flows through the first passage 102 into the first side cavity 103, since the main valve is in the normally-closed state initially, the oil in the first side cavity 103 cannot flow out. As the pressure of the incoming oil gradually increases, the oil pressure inside the first side cavity 103 may gradually become greater than that outside the first side cavity 103, thereby generating a pressure difference. Thus, an opening force for upward displacement of the main valve spool 2 may be generated by the operating cross-section S under the action of the pressure difference. When the opening force is greater than the elastic force applied by the first elastic member 3 to the main valve spool 2, the main valve spool 2 may be displaced upward under the opening force, compressing the first elastic member 3. At this time, the boss structure 2011 of the main valve spool 2 may be gradually separated from the upper end of the mounting bore 101, thereby forming the first flow path. Then, the oil in the first side cavity 103 may flow out from the second oil passage via the first flow channel. As the oil flowing from the first side cavity 103 through the first flow path may experience a pressure drop, when the flow rate and pressure of the oil flowing through the first flow path are continuously increased, the pressure difference between the oil pressure inside the first side cavity 103 and the oil pressure outside the first side cavity 103 may be continuously increased, and the opening force may also be continuously increased. Firstly, the main valve spool 2 continues to be displaced upward under the continuously increasing opening force, compressing the first elastic member 3. That is, a through-flow cross-sectional area of the first flow path may gradually expand, and the main valve may be in an overflow state. Then, when the main valve spool 2 is displaced upward to abut against the regulating rod 4 and the opening force is less than or equal to the position holding force of the regulating rod 4, under the action of the regulating rod 4, the main valve spool 2 may be maintained at a position adjusted by the regulating rod 4, causing the main valve spool 2 to stop moving. That is, the through-flow cross-sectional area of the first flow path may be maintained at a value adjusted by the regulating rod 4 and may stop expanding, and the main valve may be in a throttling state. Subsequently, when the opening force is greater than the position holding force of the regulating rod 4, the main valve spool 2, under the action of the opening force, may push the regulating rod 4 to displace upward together continuously. That is, the through-flow cross-sectional area of the first flow path may gradually expand again, and the main valve may be again in the overflow state. Finally, when the regulating rod 4 and the main valve spool 2 are displaced upward together to a preset position, the regulating rod 4 and the main valve spool 2 may stop moving. The preset position is where the regulating rod 4 or the main valve spool 2 abuts against the valve body 200. That is, the through-flow cross-sectional area of the first flow path may stop expanding again, and the main valve may be again in the throttling state. It should be noted that when the regulating rod 4 is configured as having the self-locking structure, the regulating rod 4 may not move along with the increase of the thrust from the main valve spool 2. However, the regulating rod 4 may move along with the increase of the thrust from the main valve spool 2 only when the regulating rod 4 is configured as having the non-self-locking structure. When the oil enters from the second oil passage, since the main valve is in the normally-closed state initially, the oil cannot flow into the first side cavity 103.

By virtue of the above structure, when the flow rate and pressure of the inlet oil change, the damper valve may be in a corresponding operating state. That is, the damper valve can be switched in corresponding overflow and throttling states according to the speed of extending and compressing movement of the shock absorber. Thus, adjustment and control of the magnitude and characteristics of the damping force during operation of the shock absorber can be achieved, and vehicle handling stability and drive/ride comfort can be improved.

Alternatively, the regulating assembly 400 may further include a support sleeve 6 movably disposed above the main valve spool 2 and a second elastic member 5. The first elastic member 3 may be located between the main valve spool 2 and the support sleeve 6. One end of the first elastic member 3 may abut against the main valve spool 2, and another end of the first elastic member 3 may abut against a lower end surface of the support sleeve 6. The second elastic member 5 may be located between the support sleeve 6 and the regulating rod 4. One end of the second elastic member 5 may abut against an upper end surface of the support sleeve 6, and another end of the second elastic member 5 may abut against the regulating rod 4. The second elastic member 5 may be configured to apply an elastic force to the support sleeve 6 along an axial direction of the support sleeve 6. The support sleeve 6 may be provided with a second passage 601 configured to make the first flow path and the oil passage 210 in communication with each other. The main valve spool 2 may abut against the support sleeve 6 when the main valve spool 2 is displaced upward to a preset position. The main valve spool 2 may be configured to drive the support sleeve 6 to displace upward. The main valve sleeve 1 may be provided with a stepped section 104 extending to the upper end of the mounting bore 101, and a lower end of the support sleeve 6 may abut against the stepped section 104 after the support sleeve 6 is moved downward to another preset position.

Specifically, as shown in FIG. 2, initially, the support sleeve 6 may be displaced downward under the elastic force of the second elastic member 5 to enable the lower end of the support sleeve 6 to abut against the stepped section 104. The main valve spool 2 may be displaced downward under the elastic force of the first elastic member 3 to enable the boss structure 2011 of the main valve spool 2 to abut against the upper end of the mounting bore 101 and close the opening 1011 of the mounting bore 101. Thus, the main valve may be in the normally-closed state. The regulating rod 4 can be moved up and down along the axial direction of the regulating rod 4 in an electric control manner to adjust the axial position of the regulating rod 4, thereby adjusting the elastic force applied by the second elastic member 5 to the support sleeve 6.

During operation, when the oil enters from the first oil passage and flows through the first passage 102 into the first side cavity 103, since the main valve is in the normally-closed state initially, the oil in the first side cavity 103 cannot flow out. As the pressure of the incoming oil gradually increases, the oil pressure inside the first side cavity 103 may gradually become greater than that outside the first side cavity 103, thereby generating a pressure difference. Thus, an opening force for upward displacement of the main valve spool 2 may be generated by the operating cross-section S under the action of the pressure difference. When the opening force is greater than the elastic force applied by the first elastic member 3 to the main valve spool 2, the main valve spool 2 may be displaced upward under the opening force, compressing the first elastic member 3. At this time, the boss structure 2011 of the main valve spool 2 may be gradually separated from the upper end of the mounting bore 101, thereby forming a first flow path. Then, the oil in the first side cavity 103 may flow out from the second oil passage sequentially through the first flow path and the second passage 601. As the oil flowing from the first side cavity 103 through the first flow path may experience a pressure drop, when the flow rate and pressure of the oil flowing through the first flow channel are continuously increased, the pressure difference between the oil pressure inside the first side cavity 103 and the oil pressure outside the first side cavity 103 may be continuously increased, and the opening force may also be continuously increased. Firstly, the main valve spool 2 continues to be displaced upward under the continuously increasing opening force, compressing the first elastic member 3. That is, a through-flow cross-sectional area of the first flow path may be gradually increased, and the main valve may be in an overflow state. Then, when the main valve spool 2 is displaced upward to abut against the support sleeve 6, and the opening force is less than or equal to the elastic force applied by the second elastic member 5 to the support sleeve 6, the main valve spool 2 may stop moving under the action of the second elastic member 5. That is, the through-flow cross-sectional area of the first flow path may stop expanding, and the main valve may be in a throttling state. Subsequently, when the opening force is greater than the elastic force applied by the second elastic member 5 to the support sleeve 6, the main valve spool 2, under the action of the opening force, may push the support sleeve 6 to displace upward together continuously and compress the second elastic member 5. That is, the through-flow cross-sectional area of the first flow path may gradually expand again, and the main valve may be in the overflow state again. Then, when the support sleeve 6 and the main valve spool 2 are displaced upward together to abut against the regulating rod 4, and the opening force is less than or equal to the position holding force of the regulating rod 4, under the action of the regulating rod 4, the main valve spool 2 may be maintained at a position adjusted by the regulating rod 4, causing the main valve spool 2 to stop moving. That is, the through-flow cross-sectional area of the first flow path may be maintained at a value adjusted by the regulating rod 4 and may stop expanding, and the main valve may be in the throttling state again. Subsequently, when the opening force is greater than the position holding force of the regulating rod 4, the main valve spool 2, under the action of the opening force, may push the support sleeve 6 and the regulating rod 4 to displace upward together continuously. That is, the through-flow cross-sectional area of the first flow path may be gradually increased again, and the main valve may be in the overflow state again. Finally, the regulating rod 4, the support sleeve 6 and the main valve spool 2 may be prevented by the valve body 200 from continuing to displace upward. That is, the through-flow cross-sectional area of the first flow path may stop expanding again, and the main valve may be again in the throttling state. It should be noted that when the regulating rod 4 is configured as having the self-locking structure, the regulating rod may not move along with the increase of the thrust from the main valve spool. However, the regulating rod 4 may move along with the increase of the thrust from the main valve spool only when the regulating rod 4 is configured as having the non-self-locking structure. When the oil enters from the second oil passage, since the main valve is in the normally-closed state initially, the oil cannot flow into the first side cavity 103.

Alternatively, the regulating assembly 400 may further include a support sleeve 6 movably disposed above the main valve spool 2 and a second elastic member 5. The first elastic member 3 may be located between the main valve spool 2 and the main valve sleeve 1. One end of the first elastic member 3 may abut against the main valve spool 2, and another end of the first elastic member 3 may abut against the main valve sleeve 1. The second elastic member 5 may be located between the support sleeve 6 and the regulating rod 4. One end of the second elastic member 5 may abut against an upper end surface of the support sleeve 6, and another end of the second elastic member 5 may abut against the regulating rod 4. The second elastic member 5 may be configured to apply an elastic force to the support sleeve 6 along an axial direction of the support sleeve 6. The support sleeve 6 may be provided with a second passage 601 configured to make the first flow path and the oil passage 210 in communication with each other. The main valve spool 2 may abut against the support sleeve 6. The main valve spool 2 may be configured to drive the support sleeve 6 to displace upward. The main valve sleeve 1 may be provided with a stepped section 104 extending to the upper end of the mounting bore 101. A lower end of the support sleeve 6 may abut against the stepped section 104 after the support sleeve 6 is moved downward to a preset position.

Specifically, as shown in FIG. 6, initially, the support sleeve 6 may be displaced downward under the elastic force of the second elastic member 5 to enable the lower end of the support sleeve 6 to abut against the stepped section 104. The main valve spool 2 may be displaced upward under the elastic force of the first elastic member 3 to enable the upper end surface of the main valve spool 2 to abut against the support sleeve 6. An initial gap, which is the first flow path, may be formed between the boss structure 2011 of the main valve spool 2 and the upper end of the mounting bore 101. Thus, the main valve may be in the normally-open state. The regulating rod 4 can be moved up and down along the axial direction of the regulating rod 4 in an electric control manner to adjust the axial position of the regulating rod 4, thereby adjusting the elastic force applied by the second elastic member 5 to the support sleeve 6.

During operation, when the oil enters from the first oil passage, since the main valve is in the normally-open state initially, the oil may flow sequentially through the first passage 102, the first side cavity 103, the first flow path, and the second passage 601, and exit from the second oil passage. Since the oil flowing from the first side cavity 103 through the first flow path may undergo a pressure drop, the oil pressure inside the first side cavity 103 may become greater than that outside the first side cavity 103, thereby generating a pressure difference. Thus, an opening force for upward displacement of the main valve spool 2 may be generated by the operating cross-section S under the action of the pressure difference. As the flow rate and pressure of the oil flowing through the first flow path are continuously increased, the pressure difference and the opening force may also be continuously increased. Firstly, when the opening force is less than or equal to the elastic force of the second elastic member 5, under the action of the second elastic member 5, the main valve spool 2 may be maintained at an initial position. That is, a through-flow cross-sectional area of the first flow path may be maintained at an initial value, and the main valve is in a throttling state. Then, when the opening force is greater than the elastic force of the second elastic member 5, the main valve spool 2, under the action of the opening force, may push the support sleeve 6 to displace upward together, compressing the second elastic member 5. That is, the through-flow cross-sectional area of the first flow path may be gradually increased, and the main valve may be in an overflow state. Then, when the support sleeve 6 and the main valve spool 2 are displaced together to abut against the regulating rod 4, and the opening force is less than or equal to the position holding force of the regulating rod 4, under the action of the regulating rod 4, the main valve spool 2 may be maintained at a position adjusted by the regulating rod 4, causing the main valve spool 2 to stop moving. That is, the through-flow cross-sectional area of the first flow path may be maintained at a value adjusted by the regulating rod 4 and may stop expanding, and the main valve may be in the throttling state again. Subsequently, when the opening force is greater than the position holding force of the regulating rod 4, the main valve spool 2, under the action of the opening force, may push the support sleeve 6 to displace upward together with the regulating rod 4. That is, the through-flow cross-sectional area of the first flow path may gradually expand again, and the main valve may be in the overflow state again. Finally, when the support sleeve 6, the regulating rod 4 and the main valve spool 2 are displaced upward together to a preset position, the support sleeve 6, the regulating rod 4 and the main valve spool 2 may stop moving. That is, the through-flow cross-sectional area of the first flow path may stop expanding, and the main valve may be in the throttling state. It should be noted that when the regulating rod 4 is configured as having the self-locking structure, the regulating rod may not move along with the increase of the thrust from the main valve spool. However, the regulating rod may move along with the increase of the thrust from the main valve spool only when the regulating rod 4 is configured as having the non-self-locking structure.

When the oil enters from the second oil passage, since the main valve is in the normally-open state initially, the oil may flow sequentially through the second passage 601, the first flow path, the first side cavity 103, and the first passage 102, and exit from the first oil passage. Since the oil flowing through the first flow path into an interior of the first side cavity 103 may undergo a pressure drop, the oil pressure outside the first side cavity 103 may be greater than that inside the first side cavity 103, thereby generating a pressure difference. A closing force for downward displacement of the main valve spool 2 may be generated by the operating cross-section S under the action of the pressure difference. As the flow rate and pressure of the oil flowing through the first flow path are continuously increased, the pressure difference and the closing force may also be continuously increased. Firstly, when the closing force is less than or equal to the elastic force applied by the first elastic member 3 to the main valve spool 2, the main valve spool 2 may be maintained at an initial position under the elastic force of the first elastic member 3. That is, a through-flow cross-sectional area of the first flow path may be maintained at an initial value, and the main valve may be in a throttling state. Then, when the closing force is greater than the elastic force applied by the first elastic member 3 to the main valve spool 2, the main valve spool 2 may be displaced downward under the action of the closing force, compressing the first elastic member 3. Since the through-flow cross-sectional area of the first flow path may decrease when the main valve spool 2 is displaced downward, so that the pressure difference and the closing force may be continuously increased. Therefore, the main valve spool 2 may continue to be displaced downward under the continuously increasing closing force until the boss structure 2011 of the main valve spool 2 abuts against the upper end of the mounting bore 101 and closes the opening 1011 of the mounting bore 101. At this time, the oil entering from the second oil passage cannot flow into the first side cavity 103, and the main valve may be in a closed state.

Alternatively, the first elastic member 3 may be located between the main valve spool 2 and the main valve sleeve 1. One end of the first elastic member 3 may abut against the main valve spool 2, and another end of the first elastic member 3 may abut against the main valve sleeve 1. An upper end surface of the main valve spool 2 may abut against the regulating rod 4.

Specifically, as shown in FIG. 8, initially, the main valve spool 2 may be displaced upward under the elastic force of the first elastic member 3, so that the upper end surface of the main valve spool 2 may abut against the regulating rod 4. An initial gap, which is the first flow path, may be formed between the boss structure 2011 of the main valve spool 2 and the upper end of the mounting bore 101. Thus, the main valve may be in the normally-open state. The regulating rod 4 can be moved up and down along the axial direction of the regulating rod 4 in an electric control manner to adjust the axial position of the regulating rod 4, thereby adjusting the axial position of the main valve spool 2 and changing the through-flow cross-sectional area of the first flow path.

During operation, when the oil enters from the first oil passage, since the main valve is in the normally-open state initially, the oil may sequentially flow through the first passage 102, the first side cavity 103, and the first flow path, and exit from the second oil passage. Since the oil flowing from the first side cavity 103 through the first flow path undergoes a pressure drop, the oil pressure inside the first side cavity 103 may become greater than that outside the first side cavity 103, generating a pressure difference. An opening force for upward displacement of the main valve spool 2 may be generated by the operating cross-section S under the action of the pressure difference. As the flow rate and pressure of the oil flowing through the first flow path are continuously increased, the pressure difference and the opening force may also be continuously increased. Firstly, when the opening force is less than or equal to the position holding force of the regulating rod 4, under the action of the regulating rod 4, the main valve spool 2 may be maintained at a position adjusted by the regulating rod 4. That is, a through-flow cross-sectional area of the first flow path may be maintained at a value adjusted by the regulating rod 4, and the main valve may be in the throttling state as adjusted by the regulating rod 4. Then, when the opening force is greater than the position holding force of the regulating rod 4, the main valve spool 2, under the action of the opening force, may push the regulating rod 4 to displace upward together. That is, the through-flow cross-sectional area of the first flow path may be gradually increased, and the main valve may be in the overflow state as adjusted by the regulating rod 4. Finally, when the regulating rod 4 and the main valve spool 2 together are displaced to a preset position, the regulating rod 4 and the main valve spool 2 may stop moving. That is, the through-flow cross-sectional area of the first flow path may stop expanding, and the main valve may be in the throttling state again. It should be noted that when the regulating rod 4 is configured as having the self-locking structure, the regulating rod may not move along with the increase of the thrust from the main valve spool. However, the regulating rod 4 may move along with the increase of the thrust from the main valve spool only when the regulating rod 4 is configured as having the non-self-locking structure.

When the oil enters from the second oil passage, since the main valve is in the normally-open state initially, the oil may flow sequentially through the first flow path, the first side cavity 103 and the first passage 102, and exit from the first oil passage. Since the oil flowing through the first flow path into the first side cavity 103 may undergo a pressure drop, the oil pressure outside the first side cavity 103 may be greater than that inside the first side cavity 103, thereby generating a pressure difference. A closing force for downward displacement of the main valve spool 2 may be generated by the operating cross-section S under the action of the pressure difference. As the flow rate and pressure of the oil flowing through the first flow path are continuously increased, the pressure difference and the closing force may also be continuously increased. Firstly, when the closing force is less than or equal to the elastic force applied by the first elastic member 3 to the main valve spool 2, the main valve spool 2 may be maintained at a position adjusted by the regulating rod 4 under the action of the elastic force of the first elastic member 3. That is, the through-flow cross-sectional area of the first flow path may be maintained at a value adjusted by the regulating rod 4, and the main valve may be in the throttling state as adjusted by the regulating rod 4. Then, when the closing force is greater than the elastic force applied by the first elastic member 3 to the main valve spool 2, the main valve spool 2 may be displaced downward under the action of the closing force, compressing the first elastic member 3. Since the through-flow cross-sectional area of the first flow path may be decreased when the main valve spool 2 is displaced downward, so that the pressure difference and the closing force may be continuously increased. Therefore, the main valve spool 2 may continue to be displaced downward under the continuously increasing closing force until the boss structure 2011 of the main valve spool 2 abuts against the upper end of the mounting bore 101 and closes the opening 1011 of the mounting bore 101. At this time, the oil entering from the second oil passage cannot flow into the first side cavity 103, and the main valve may be in the closed state.

It should be further noted that, as shown in FIG. 6 and FIG. 8, when the designed operating diameter d2 is equal to the operating diameter d1, that is, the area of the operating cross-section S is equal to zero, during operation, regardless of whether the oil flows from the first oil passage into the first side cavity 103 and then out through the first flow path to the second oil passage, or flows from the second oil passage through the first flow path into the first side cavity 103 and then out through the first passage 102 to the first oil passage, and regardless of changes in the flow rate and pressure of the oil, the opening force and the closing force remain zero. Consequently, the main valve spool 2 may not be displaced due to the changes in flow direction, flow rate and pressure of the oil.

Alternatively, the inner wall of the support sleeve 6 may be recessed upward to form an outer movable cavity 602. The boss structure 2011 may be located in the outer movable cavity 602. The boss structure 2011 may be displaced upward to abut against a bottom of the outer movable cavity 602. When the boss structure 2011 is displaced downward to abut against the upper end of the mounting bore 101, a gap may be formed between the boss structure 2011 and the inner wall of the outer movable cavity 602.

Alternatively, a middle part of the support sleeve 6 may be recessed downward to form an inner movable cavity 603. The second elastic member 5 may be disposed between a bottom of the inner movable cavity 603 and the regulating rod 4.

Alternatively, the second channel 601 may be provided at a periphery of the support sleeve 6 at a position where the support sleeve 6 abuts against the stepped section 104.

Alternatively, the first elastic member 3 may be configured as a spring.

Alternatively, the second elastic member 5 may be configured as a spring.

Specifically, the first elastic member 3 may be configured to set an initial state of the main valve spool 2 relative to the main valve sleeve 1, reset after displacement of the main valve spool 2 relative to the main valve sleeve 1, and set the elastic force applied to the main valve spool 2. The second elastic member 5 may be configured to set an initial state of the support sleeve 6 relative to the main valve sleeve 1, reset after displacement of the support sleeve 6 relative to the main valve sleeve 1, and set the elastic force applied to the support sleeve 6.

Alternatively, a lower outer wall of the main valve spool 2 and the inner wall of the mounting bore 101 may be sealed against each other.

Alternatively, the lower outer wall of the main valve spool 2 and the inner wall of the mounting bore 101 may be sealed by a first sealing member 202. The first sealing member 202 may include a sealing ring.

It should be noted that the mounting bore 101 may have a recessed structure. Providing the main valve spool 2 within the recessed mounting bore 101 can further enhance the space utilization rate, so that the structure between the main valve spool 2 and the main valve sleeve 1 is more compact.

Alternatively, the damper valve assembly 100 may further include a third elastic member 9, an auxiliary valve spool 8, and an auxiliary valve sleeve 7. The auxiliary valve spool 8 may be disposed in the auxiliary valve sleeve 7. The auxiliary valve spool 8 may be movable along an axial direction of the auxiliary valve sleeve 7. The auxiliary valve spool 8 may be disposed below the main valve sleeve 1. The third elastic member 9 may be disposed between the auxiliary valve spool 8 and the main valve sleeve 1. The third elastic member 9 may be configured to apply an elastic force to the auxiliary valve spool 8 along an axial direction of the auxiliary valve spool 8. A support platform 701 may be inwardly protruded from a lower portion of an inner wall of the auxiliary valve sleeve 7. The auxiliary valve spool 8 may abut against the support platform 701 under an action of the third elastic member 9. A lower end surface of the auxiliary valve spool 8, the support platform 701, and the valve body 200 may be enclosed to form an outer cavity 702.

It should be noted that, after the auxiliary valve spool 8 abuts against the support platform 701, the abutment between the auxiliary valve spool 8 and the support platform 701 may be designed to be a sealed structure or a non-sealed structure. Specifically, when designed as the non-sealed structure, a minor gap may remain after the auxiliary valve spool 8 is in contact with the support platform 701, or the non-sealed structure may be achieved by small holes or grooves on the auxiliary valve spool 8 or the support platform 701.

Alternatively, an inner wall of the auxiliary valve sleeve 7, an outer wall of the main valve sleeve 1, and an upper end surface of the auxiliary valve spool 8 may be enclosed to form a control cavity 703. A middle part of the auxiliary valve spool 8 may be recessed downward to form an inner cavity 801. A lower part of the main valve sleeve 1 may be disposed in the inner cavity 801. The inner cavity 801 may be in communication with the control cavity 703.

It should be noted that the middle part of the auxiliary valve spool 8 may be recessed downward to form the inner cavity 801, and the lower part of the main valve sleeve 1 may be disposed in the inner cavity 801. Thus, the space utilization can be further improved, and the structure between the main valve sleeve 1 and the auxiliary valve spool 8 can be more compact.

Alternatively, the inner wall of the auxiliary valve sleeve 7, the auxiliary valve spool 8 and the support platform 701 may be enclosed to form a second side cavity 704. The auxiliary valve sleeve 7 may be provided with a third passage 705. The second side cavity 704 may be in communication with the oil passage 210 via the third passage 705. The auxiliary valve spool 8 may be further provided with an oil through hole 802. The oil through hole 802 may be located on a side surface of the auxiliary valve spool 8 or a bottom surface of the auxiliary valve spool 8. When the oil through hole 802 is located on the side surface of the auxiliary valve spool 8, the oil through hole 802 may be in communication with the inner cavity 801 and the second side cavity 704. When the oil through hole 802 is located on the bottom surface of the auxiliary valve spool 8, the oil through hole 802 may be in communication with the inner cavity 801 and the outer cavity 702.

It should be further noted that the reason for disposing the oil through hole 802 on the side surface of the auxiliary valve spool 8 or the bottom surface of the auxiliary valve spool 8 is to adapt to different assembly environments. If the assembly environment requires that the flow pressure of the oil entering from the second side cavity 704 be controlled, the oil through hole 802 is selected to be disposed on the side surface of the auxiliary valve spool 8. That is, the technical solution where the second side cavity 704 is in communication with the control cavity 703 via the oil through hole 802 is selected. If the assembly environment requires that the flow pressure of the oil entering from the outer cavity 702 be controlled, the oil through hole 802 is selected to be disposed on the bottom surface of the auxiliary valve spool 8. That is, the technical solution that the outer cavity 702 is in communication with the control cavity 703 via the oil through hole 802 is selected.

Alternatively, the auxiliary valve sleeve 7 may be further provided with a fourth passage 706 in communication with the oil passage 210.

Alternatively, the outer side wall of the auxiliary valve spool 8 and the inner wall of the auxiliary valve sleeve 7 may be sealed against each other.

Alternatively, the outer side wall of the auxiliary valve spool 8 and the inner wall of the auxiliary valve sleeve 7 may be sealed by a second sealing member 803, and the second sealing member 803 may include a sealing ring.

Alternatively, the third elastic member 9 may be configured as a spring.

Specifically, one end of the third elastic member 9 may abut against the auxiliary valve spool 8, and another end of the third elastic member 9 may abut against the main valve sleeve 1. The third elastic member 9 may be configured to set an initial state of the auxiliary valve spool 8 relative to the auxiliary valve sleeve 7, reset after displacement of the auxiliary valve spool 8 relative to the auxiliary valve sleeve 7, and setting the elastic force applied to the auxiliary valve spool 8.

Alternatively, two damper valve assemblies 100 may be provided in the damper valve, and the two damper valve assemblies 100 may be in communication with each other via the valve body 200.

Specifically, two damper valve assemblies 100 may be provided in the damper valve. These two damper valve assemblies 100 may be coaxially arranged, or with their axes forming a certain angle, arranged side by side, or symmetrically arranged in an up-down manner within the damper valve. The two damper valve assemblies 100 may be connected through the valve body 200 and in communication with each other via the oil passage 210 on the valve body 200. The specific arrangement of the two damper valve assemblies 100 can be selected according to specific application scenarios. The present disclosure will be described by taking an example where two damper valve assemblies 100 are arranged in the up-down symmetrical structure.

Alternatively, the oil passage 210 of the valve body 200 may be provided with a disc valve 10.

Specifically, each damper valve assembly 100 may be correspondingly provided with a disc valve 10. The disc valve 10 serves to provide throttling and overflow functions. When the oil pressure is relatively low, the oil may flow directly through an orifice of the disc valve 10. When the oil pressure is relatively high, a valve plate of the disc valve 10 may be displaced or elastically deformed to one side under the action of the oil pressure, so that the valve plate may be gradually separated from the sealing surface to form a through-flow gap. Then, the oil may flow through the orifice and the through-flow gap simultaneously. When the oil pressure is decreased or subjected to reverse oil pressure, the valve plate may return to a preset position under the action of its own elasticity, reverse oil pressure, or the reset elastic member of the disc valve 10, so that the valve plate may abut against the sealing surface. At the same time, the disc valve 10 may also function to prevent accidents in the event of a failure or malfunction of the damper valve assembly 100. When a malfunction such as the damper valve assembly 100 becoming stuck and failing to open, or a fault such as blockage occurs in the damper valve assembly 100, obstructing the oil passage, the disc valve 10 can guide the incoming oil out of the valve body 200. In the event that the damper valve assembly 100 becomes stuck and fails to reset or suffers other malfunctions causing the damper valve assembly 100 to lose throttling and overflow functions, the disc valve 10 may provide basic throttling and overflow functionality.

The present disclosure further provides a hydraulic damper. The hydraulic damper includes a shock absorber and the damper valve. The shock absorber is in communication with the damper valve.

The hydraulic damper may include the shock absorber and the damper valve in communication with each other. The damper valve can react differently according to the operation of the shock absorber. The shock absorber may include a single-rod oil cylinder. When the shock absorber is the single-rod oil cylinder, the hydraulic damper may be provided with a liquid storage barrel to cooperate with the single-rod oil cylinder. The single-rod oil cylinder may include a piston-rod assembly, which divides the interior of the single-rod oil cylinder into a rod cavity and a non-rod cavity. In the following embodiments, the shock absorber extension can be understood as that the wheels and the body of the vehicle moving away from each other (i.e., the piston-rod assembly moving towards the rod cavity); and the shock absorber compression can be understood as that the wheels and the body of the vehicle moving close to each other (i.e., the piston-rod assembly moving towards the non-rod cavity). The damper valve can be configured in various structures.

### The first embodiment

As shown in FIG. 1 and FIG. 2, the damper valve may include a damper valve assembly 100 and a valve body 200. The valve body 200 may be provided with an oil passage 210 for oil inlet and outlet, and the damper valve assembly 100 may include a main valve sleeve 1, a main valve spool 2, and a regulating assembly 400.

The main valve sleeve 1 may be provided with a mounting bore 101. An upper end of the mounting bore 101 may be provided with an opening 1011. A side wall of the mounting bore 101 may be provided with a first passage 102, and the first passage 102 may be in communication with the oil passage 210.

The main valve spool 2 may be inserted into the mounting bore 101 of the main valve sleeve 1. The main valve spool 2 may be movable along an axial direction of the main valve sleeve 1. A first side cavity 103 may be formed between the main valve spool 2 and an inner wall of the mounting bore 101. The first passage 102 may be in communication with the first side cavity 103. The main valve spool 2 may be further provided with a through hole 201. The through hole 201 serves a pressure balancing function, allowing the oil to flow in a direction of an upper end surface and a lower end surface of the main valve spool 2, and maintaining a balance of oil pressure in the axial direction on the upper end surface and the lower end surface of the main valve spool 2 during operation of the damper valve. An upper portion of the main valve spool 2 may be provided with a boss structure 2011. The boss structure 2011 may extend out of the mounting bore 101. When the main valve spool 2 is displaced downward to a preset position, the boss structure 2011 may abut against the upper end of the mounting bore 101 and close the opening 1011 of the mounting bore 101. When the main valve spool 2 is displaced upward, the boss structure 2011 may be gradually separated from the upper end of the mounting bore 101, creating a gap which forms a first flow path. The first flow path may be in communication with the first side cavity 103. A first elastic member 3 may be located between the main valve spool 2 and a support sleeve 6. One end of the first elastic member 3 may abut against the main valve spool 2, and another end of the first elastic member 3 may abut against the lower end surface of the support sleeve 6. The first elastic member 3 may be configured to apply an elastic force to the main valve spool 2 along an axial direction of the main valve spool 2.

The regulating assembly 400 may include a support sleeve 6 movably disposed above the main valve spool 2, a regulating rod 4, and a second elastic member 5. The second elastic member 5 may be located between the support sleeve 6 and the regulating rod 4. One end of the second elastic member 5 may abut against an upper end surface of the support sleeve 6, and another end of the second elastic member 5 may abut against the regulating rod 4. The second elastic member 5 may be configured to apply an elastic force to the support sleeve 6 along an axial direction of the support sleeve 6. The support sleeve 6 may be provided with a second passage 601 configured to make the first flow path and the oil passage 210 in communication with each other. The second passage 601 may be provided at a periphery of the support sleeve 6 at a position where the support sleeve 6 abuts against a stepped section 104. The main valve spool 2 may abut against the support sleeve 6 when the main valve spool 2 is displaced upward to a preset position. The main valve spool 2 may be configured to drive the support sleeve 6 to displace upward. The main valve sleeve 1 may be provided with the stepped section 104 extending to the upper end of the mounting bore 101. A lower end of the support sleeve 6 may abut against the stepped section 104 after the support sleeve 6 is displaced downward to another preset position.

The oil passage 210 on the valve body 200 may include a first oil passage and a second oil passage. The first oil passage may be in communication with a port N, and the second oil passage may be in communication with a port M.

Initially, the support sleeve 6 may be displaced downward under the elastic force of the second elastic member 5 to enable the lower end of the support sleeve 6 to abut against the stepped section 104. The main valve spool 2 may be displaced downward under the elastic force of the first elastic member 3 to enable the boss structure 2011 of the main valve spool 2 to abut against the upper end of the mounting bore 101. Thus, the main valve may be in a normally-closed state.

During operation, when the port M is configured as an oil inlet, and the port N is configured as an oil outlet, as shown in FIG. 2 and indicated by a solid-line oil flowing path m2, the operation process of the main valve will be described below. Firstly, the oil may enter the second oil passage of the damper valve from the port M. Then, the oil may enter the first side cavity 103 by passing through the third passage 705, the second side cavity 704, the oil through hole 802, the inner cavity 801, the control cavity 703, and the first passage 102, sequentially. Since the main valve is in the normally-closed state initially, the oil in the first side cavity 103 cannot flow out. As the pressure of the oil entering from the port M is gradually increased, the oil pressure inside the first side cavity 103 may also gradually become greater than that outside the first side cavity 103, generating a pressure difference. An opening force for upward displacement of the main valve spool 2 may be generated by the operating cross-section S under the action of the pressure difference. When the opening force is greater than the elastic force applied by the first elastic member 3 to the main valve spool 2, the main valve spool 2 may be displaced upward under the action of the opening force, compressing the first elastic member 3. At this time, the boss structure of the main valve spool 2 may be gradually separated from the upper end of the mounting bore 101, thereby forming a first flow path. Then, the oil in the first side cavity 103 may flow sequentially through the first flow path, the second passage 601, the fourth passage 706, and the first oil passage, and exit the damper valve from the port N.

Since the oil flowing from the first side cavity 103 through the first flow path may experience a pressure drop, when the flow rate and pressure of the oil flowing through the first flow path are continuously increased, the pressure difference between the oil pressure inside the first side cavity 103 and the oil pressure outside the first side cavity 103 may be continuously increased, and the opening force may also be continuously increased. Firstly, the main valve spool 2 continues to be displaced upward under the continuously increasing opening force, compressing the first elastic member 3. That is, a through-flow cross-sectional area of the first flow path may be gradually increased, and the main valve may be in an overflow state. Then, when the main valve spool 2 is displaced upward to abut against the support sleeve 6, and the opening force is less than or equal to the elastic force applied by the second elastic member 5 to the support sleeve 6, the main valve spool 2 may stop moving under the action of the second elastic member 5. That is, the through-flow cross-sectional area of the first flow path may stop expanding, and the main valve may be in a throttling state. Subsequently, when the opening force is greater than the elastic force applied by the second elastic member 5 to the support sleeve 6, the main valve spool 2, under the action of the opening force, may push the support sleeve 6 to displace upward together continuously and compress the second elastic member 5. That is, the through-flow cross-sectional area of the first flow path may gradually expand again, and the main valve may be again in the overflow state. Then, when the support sleeve 6 and the main valve spool 2 are displaced upward together to abut against the regulating rod 4, and the opening force is less than or equal to the position holding force of the regulating rod 4, under the action of the regulating rod 4, the main valve spool 2 may be maintained at a position adjusted by the regulating rod 4. That is, the through-flow cross-sectional area of the first flow path may be maintained at a value adjusted by the regulating rod 4, and the main valve may be in the throttling state again. Subsequently, when the opening force is greater than the position holding force of the regulating rod 4, the main valve spool 2, under the action of the opening force, may push the support sleeve 6 and the regulating rod 4 to displace upward together continuously. That is, the through-flow cross-sectional area of the first flow path may be gradually increased again, and the main valve may be again in the overflow state. Finally, the regulating rod 4, the support sleeve 6, and the main valve spool 2 may be prevented by the valve body 200 from continuing to displace upward. That is, the through-flow cross-sectional area of the first flow path may stop expanding again, and the main valve may be again in the throttling state.

The main valve, composed of the main valve spool 2, the main valve sleeve 1, and the first elastic member 3, can operate independently. Moreover, the main valve is capable of achieving multi-stage multi-state regulation according to changes in flow rate and pressure. During implementation, the motion speed of the shock absorber changes during extension or compression of the shock absorber. As the motion speed of the shock absorber varies, the flow rate and pressure of the oil passing through the main valve also change accordingly. The main valve may be in an operating state corresponding to the flow rate and the pressure. For example, when the flow rate and the pressure reach a certain preset range, the main valve may be in a corresponding stage of overflow or throttling state, so that the flow characteristics (flow rate-pressure curve) of the main valve can approach the required ideal curve after the multi-stage multi-state regulation.

A corresponding back pressure may be generated in the circuit in an operating state of each stage of the main valve. A corresponding damping force may be generated by the operating cross-section of the piston of the shock absorber under the action of the back pressure. That is, a corresponding damping force may be generated by the shock absorber at each speed range during the extension or compression motion.

The damper valve assembly 100 may further include an auxiliary valve. The auxiliary valve may include an auxiliary valve sleeve 7, an auxiliary valve spool 8, and a third elastic member 9. The auxiliary valve spool 8 may be disposed in the auxiliary valve sleeve 7. The auxiliary valve spool 8 may be movable along an axial direction of the auxiliary valve sleeve 7. The auxiliary valve spool 8 may be disposed below the main valve sleeve 1. The third elastic member 9 may be disposed between the auxiliary valve spool 8 and the main valve sleeve 1. The third elastic member 9 may be configured to apply an elastic force to the auxiliary valve spool 8 along an axial direction of the auxiliary valve spool 8. A support platform 701 may be inwardly protruded from a lower portion of an inner wall of the auxiliary valve sleeve 7. The auxiliary valve spool 8 may abut against the support platform 701 under the action of the third elastic member 9. A lower end surface of the auxiliary valve spool 8, the support platform 701, and the valve body 200 may be enclosed to form an outer cavity 702. The inner wall of the auxiliary valve sleeve 7, the outer wall of the main valve sleeve 1, and the upper end surface of the auxiliary valve spool 8 may be enclosed to form a control cavity 703. A middle part of the auxiliary valve spool 8 may be recessed downward to form an inner cavity 801. A lower part of the main valve sleeve 1 may be disposed in the inner cavity 801, and the inner cavity 801 may be in communication with the control cavity 703. The inner wall of the auxiliary valve sleeve 7, the auxiliary valve spool 8, and the support platform 701 may be enclosed to form a second side cavity 704. The auxiliary valve sleeve 7 may be provided with a third passage 705. The second side cavity 704 may be in communication with the oil passage 210 via the third passage 705. The auxiliary valve spool 8 may be further provided with an oil through hole 802. The oil through hole 802 may be located on a side surface of the auxiliary valve spool 8, and the oil through hole 802 may be in communication with the inner cavity 801 and the second side cavity 704. The auxiliary valve sleeve 7 may be further provided with a fourth passage 706, and the fourth passage 706 may be in communication with the second passage 601 and the oil passage 210.

As shown in FIG. 2 and indicated by dotted-line oil flowing paths m1 and m2, the operating process of the auxiliary valve will be described below. Since the oil flowing from the second side cavity 704 into the inner cavity 801 may undergo a pressure drop when flowing through the oil through hole 802, the oil pressure inside the second side cavity 704 may be greater than that inside the inner cavity 801 and the control cavity 703, thereby generating a pressure difference. An opening force for upward displacement of the auxiliary valve spool 8 may be generated by the auxiliary valve spool 8 under the action of the pressure difference. As the flow rate of the oil flowing through the oil through hole 802 is continuously increased, the pressure difference may be continuously increased, and the opening force may also be continuously increased. When the opening force is less than or equal to the elastic force applied by the third elastic member 9 to the auxiliary valve spool 8, the auxiliary valve spool 8, under the elastic force of the third elastic member 9, may maintain the abutting between the bottom of the auxiliary valve spool 8 and the support platform 701. Consequently, the oil in the second side cavity 704 cannot flow to the outer cavity 702, and the auxiliary valve may be in a closed state. It should be noted that when the abutment between the auxiliary valve spool 8 and the support platform 701 is designed as having a non-sealed structure, the oil in the second side cavity 704 may flow to the outer cavity 702 through preset gaps at the abutment formed between the auxiliary valve spool 8 and the support platform 701 after the auxiliary valve spool 8 contacts the support platform 701 and/or through preset small holes or grooves on the auxiliary valve spool 8 or the support platform 701, and the auxiliary valve may be in a throttling state. When the opening force is greater than the elastic force applied by the third elastic member 9 to the auxiliary valve spool 8, the auxiliary valve spool 8 may be displaced upward under the action of the opening force, compressing the third elastic member 9. At this time, the auxiliary valve spool 8 may be gradually separated from the support platform 701, and a second flow path may be formed between the bottom of the auxiliary valve spool 8 and the support platform 701. The oil may flow from the second side cavity 704 to the outer cavity 702 through the second flow path. In the above process, since the flow rate of the oil flowing through the oil through hole 802 is controlled by the displacement between the main valve spool 2 and the main valve sleeve 1, i.e., by the through-flow cross-sectional area of the first flow path, the pressure drop of the oil when flowing through the oil through hole 802 may be controlled. Consequently, the operating process of the auxiliary valve may also be controlled. That is, the flow-rate pressure characteristics of the oil flowing from the second side cavity 704 to the outer cavity 702 through the second flow path may be controlled. When the auxiliary valve spool 8 is displaced upward to a preset position and stops moving, the auxiliary valve may be in the throttling state. Finally, the oil may exit the damper valve from the port N through the first oil passage. It should be noted that by increasing the through-flow cross-sectional area of the oil through hole 802, the pressure drop generated when the oil flows through the oil through hole 802 can be reduced. Therefore, the pressure difference between the second side cavity 704 and the control cavity 703 is decreased, the opening force of the upward displacement of the auxiliary valve spool 8 is also decreased. When the through-flow cross-sectional area of the oil through hole 802 is increased to a certain extent, the opening force of the auxiliary valve spool 8 can be always smaller than the elastic force applied by the third elastic member 9 to the auxiliary valve spool 8, so that the auxiliary valve may not be controlled by the main valve.

When the port N is configured as an oil inlet and the port M is configured as an oil outlet, as shown in FIG. 2 and indicated by a dotted-line oil flowing path n1, the process will be described below. Firstly, the oil may enter the first oil passage of the damper valve from the port N. Since the main valve is in a normally-closed state initially, the oil cannot flow into the control cavity 703 via the fourth passage 706 and the second passage 601. However, the oil in the control cavity 703 can flow out from the oil through hole 802 via the inner cavity 801. Therefore, when the oil enters the outer cavity 702 from the port N, the oil pressure inside the outer cavity 702 may be greater than that inside the control cavity 703, thereby generating a pressure difference. An opening force for upward displacement of the auxiliary valve spool 8 may be generated by the auxiliary valve spool 8 under the action of the pressure difference. As the pressure of the oil entering from the port N is gradually increased, the pressure difference may be gradually increased, and the opening force may also be gradually increased. When the opening force is less than or equal to the elastic force applied by the third elastic member 9 to the auxiliary valve spool 8, the auxiliary valve spool 8, under the elastic force of the third elastic member 9, may maintain the abutting between the bottom of the auxiliary valve spool 8 and the support platform 701. Consequently, the oil in the outer cavity 702 cannot flow to the second side cavity 704, and the auxiliary valve may be in a closed state. It should be noted that when the abutment between the auxiliary valve spool 8 and the support platform 701 is designed as having the non-sealed structure, the oil in the outer cavity 702 may flow to the second side cavity 704 through preset gaps at the abutment formed between the auxiliary valve spool 8 and the support platform 701 after the auxiliary valve spool 8 is in contact with the support platform 701 and/or through preset small holes or grooves on the auxiliary valve spool 8 or the support platform 701, and the auxiliary valve may be in a throttling state. When the opening force is greater than the elastic force applied by the third elastic member 9 to the auxiliary valve spool 8, the auxiliary valve spool 8 may be displaced upward under the action of the opening force, compressing the third elastic member 9. At this time, the bottom of the auxiliary valve spool 8 may be gradually separated from the support platform 701, forming a second flow path. The oil may flow from the outer cavity 702 to the second side cavity 704 via the second flow path, and the auxiliary valve may be in the overflow state. When the auxiliary valve spool 8 is displaced upward to a preset position and stops moving, the auxiliary valve may be in the throttling state. Finally, the oil may exit the damper valve from the port M sequentially through the third passage 705 and the second oil passage.

### The second embodiment

As shown in FIG. 3 and FIG. 4, the difference between the second embodiment and the first embodiment lies in the regulating assembly 400, which includes a regulating rod 4 but does not include the second elastic member 5 and the support sleeve 6. One end of the first elastic member 3 may abut against the main valve spool 2, and another end of the first elastic member 3 may directly abut against the regulating rod 4. The oil through hole 802 may be provided on the bottom surface of the auxiliary valve spool 8, and configured to make the inner cavity 801 and the outer cavity 702 in communication with each other. The auxiliary valve sleeve 7 may not be provided with the fourth channel 706.

Initially, the main valve spool 2 may be displaced downward under the elastic force of the first elastic member 3, so that the boss structure 2011 of the main valve spool 2 abuts against the upper end of the mounting bore 101. Thus, the main valve may be in a normally-closed state.

During operation, when the port N is configured as an oil inlet and the port M is configured as an oil outlet, as shown in FIG. 4 and indicated by a solid-line oil flowing path n2, the operation process of the main valve will be described below. The oil may firstly enter the first oil passage of the damper valve from the port N, and then the oil may enter the first side cavity 103 sequentially through the outer cavity 702, the oil through hole 802, the inner cavity 801, the control cavity 703, and the first passage 102. Since the main valve is in the normally-closed state initially, the oil in the first side cavity 103 cannot flow out. When the pressure of the oil entering from the port N is gradually increased, the oil pressure inside the first side cavity 103 may gradually become greater than that outside the first side cavity 103, generating a pressure difference. An opening force for upward displacement of the main valve spool 2 may be generated by the operating cross-section S under the action of the pressure difference. When the opening force is greater than the elastic force applied by the first elastic member 3 to the main valve spool 2, the main valve spool 2 may be displaced upward under the action of the opening force, compressing the first elastic member 3. At this time, the boss structure 2011 of the main valve spool 2 may be gradually separated from the upper end of the mounting bore 101, thereby forming a first flow path. The oil in the first side cavity 103 may sequentially through the first flow path and the second oil passage, and exit the damper valve from the port M.

Since the oil flowing from the first side cavity 103 through the first flow path experiences a pressure drop, when the flow rate and pressure of the oil flowing through the first flow path are continuously increased, the pressure difference between the oil pressure inside the first side cavity 103 and the oil pressure outside the first side cavity 103 may be continuously increased, and the opening force may also be continuously increased. Firstly, the main valve spool 2 continues to be displaced upward under the continuously increasing opening force, compressing the first elastic member 3. That is, a through-flow cross-sectional area of the first flow path may be gradually expand, and the main valve may be in an overflow state. Then, when the main valve spool 2 is displaced upward to abut against the regulating rod 4, and the opening force is less than or equal to the position holding force of the regulating rod 4, under the action of the regulating rod 4, the main valve spool 2 may be maintained at a position adjusted by the regulating rod 4. That is, the through-flow cross-sectional area of the first flow path may be maintained at a value adjusted by the regulating rod 4, and the main valve may be in the throttling state. Then, when the opening force is greater than the position holding force of the regulating rod 4, the main valve spool 2, under the action of the opening force, may push the regulating rod 4 to displace upward together continuously. That is, the through-flow cross-sectional area of the first flow path may gradually expand again, and the main valve may be again in the overflow state again. Finally, the regulating rod 4 and the main valve spool 2 may be prevented by the valve body 200 from continuing to displace upward. That is, the through-flow cross-sectional area of the first flow path may stop expanding again, and the main valve may be again in the throttling state.

As shown in FIG. 4 and indicated by solid-line oil flowing paths n1 and n2, the operating process of the auxiliary valve will be described below. Since the oil flowing from the outer cavity 702 into the inner cavity 801 may experience a pressure drop when flowing through the oil through hole 802, the oil pressure inside the outer cavity 702 may be greater than that inside the inner cavity 801 and the control cavity 703, thereby generating a pressure difference. An opening force for upward displacement of the auxiliary valve spool 8 may be generated by the auxiliary valve spool 8 under the action of the pressure difference. As the flow rate of the oil flowing through the oil through hole 802 is continuously increased, the pressure difference and the opening force may also be continuously increased. When the opening force is less than or equal to the elastic force applied by the third elastic member 9 to the auxiliary valve spool 8, the auxiliary valve spool 8, under the elastic force of the third elastic member 9, may maintain the abutting between the bottom of the auxiliary valve spool 8 and the support platform 701. Consequently, the oil in the outer cavity 702 cannot flow to the second side cavity 704, and the auxiliary valve may be in a closed state. When the opening force is greater than the elastic force applied by the third elastic member 9 to the auxiliary valve spool 8, the auxiliary valve spool 8 may be displaced upward under the action of the opening force, compressing the third elastic member 9. At this time, the bottom of the auxiliary valve spool 8 may be gradually separated from the support platform 701, forming a second flow path. The oil may flow from the outer cavity 702 to the second side cavity 704 via the second flow path. In the above process, since the flow rate of the oil flowing through the oil through hole 802 is controlled by the displacement between the main valve spool 2 and the main valve sleeve 1, i.e., by the through-flow cross-sectional area of the first flow path, the pressure drop of the oil when flowing through the oil through hole 802 may be controlled. Consequently, the operating process of the secondary valve may also be controlled. That is, the flow-rate pressure characteristics of the oil flowing from the outer cavity 702 to the second side cavity 704 through the second flow path may be controlled. When the auxiliary valve spool 8 is displaced upward to a preset position and stops moving, the auxiliary valve may be in a throttling state. Finally, the oil may leave the damper valve from the port M sequentially through the third passage 705 and the second oil passage.

When the port M is configured as an oil inlet, and the port N is configured as an oil outlet, as shown in FIG. 4 and indicated by a dotted-line oil flowing path m1, the process will be described below. Firstly, the oil may enter the second oil passage of the damper valve from the port M. Since the main valve is initially in a normally-closed state, the oil in the second oil passage cannot flow into the control cavity 703, but the oil in the control cavity 703 can flow out from the oil through hole 802 via the inner cavity 801. Thus, when the oil enters the second side cavity 704 from the port M, the oil pressure inside the second side cavity 704 may be greater than that inside the control cavity 703, thereby generating a pressure difference. An opening force for upward displacement of the auxiliary valve spool 8 may be generated by the auxiliary valve spool 8 under the action of the pressure difference. As the pressure of the oil entering from the port M is gradually increased, the pressure difference and the opening force may be gradually increased. When the opening force is less than or equal to the elastic force applied by the third elastic member 9 to the auxiliary valve spool 8, the auxiliary valve spool 8, under the action of the elastic force of the third elastic member 9, may maintain the abutting between the bottom of the auxiliary valve spool 8 and the support platform 701. Consequently, the oil in the second side cavity 704 cannot flow to the outer cavity 702, and the auxiliary valve may be in a closed state. When the opening force is greater than the elastic force applied by the third elastic member 9 to the auxiliary valve spool 8, the auxiliary valve spool 8 may be displaced upward under the action of the opening force, compressing the third elastic member 9. At this time, the bottom of the auxiliary valve spool 8 may be gradually separated from the support platform 701, forming a second flow path. The oil may flow from the second side cavity 704 to the outer cavity 702 through the second flow path, and the auxiliary valve may be in an overflow state. When the auxiliary valve spool 8 is displaced upward to a preset position and stops moving, the auxiliary valve may be in a throttling state. Finally, the oil may exit the damper valve from the port N through the first oil passage.

### The third embodiment

As shown in FIG. 5 and FIG. 6, the difference between the third embodiment and the first embodiment is that one end of the first elastic member 3 may abut against the main valve spool 2, and another end of the first elastic member 3 may abut against the main valve sleeve 1. The oil through hole 802 may be disposed on the bottom surface of the auxiliary valve spool 8, and in communication with the inner cavity 801 and the outer cavity 702. In addition, the auxiliary valve sleeve 7 may not be provided with the fourth passage 706.

Initially, the support sleeve 6 may be displaced downward under the elastic force of the second elastic member 5 to enable the lower end of the support sleeve 6 to abut against the stepped section 104. The main valve spool 2 may be displaced upward under the elastic force of the first elastic member 3 to enable the upper portion of the main valve spool 2 to abut against the support sleeve 6. Thus, an initial gap between the boss structure 2011 of the main valve spool 2 and the upper end of the mounting bore 101 may form a first flow path, and the main valve may be in a normally-open state.

During operation, when the port N is configured as an oil inlet and the port M is configured as an oil outlet, as shown in FIG. 6 and indicated by a solid-line oil flowing path n2, the operation process of the main valve will be described below. Firstly, the oil may enter the first oil passage of the damper valve from the port N. Since the main valve is in a normally-open state initially, the oil may exit the damper valve from the port M sequentially through the outer cavity 702, the oil through hole 802, the inner cavity 801, the control cavity 703, the first passage 102, the first side cavity 103, the first flow path, the second passage 601 and the second oil passage.

Since the oil flowing from the first side cavity 103 through the first flow path may undergo a pressure drop, the oil pressure inside the first side cavity 103 may be greater than that outside the first side cavity 103, thereby generating a pressure difference. An opening force for upward displacement of the main valve spool 2 may be generated by the operating cross-section S under the action of the pressure difference. As the flow rate and pressure of the oil flowing through the first flow path are continuously increased, the pressure difference and the opening force may also be continuously increased. Firstly, when the opening force is less than or equal to the elastic force applied by the second elastic member 5 to the support sleeve 6, the main valve spool 2 may be maintained at an initial position under the action of the second elastic member 5. That is, a through-flow cross-sectional area of the first flow path may be maintained at an initial value, and the main valve may be in a throttling state. Then, when the opening force is greater than the elastic force applied by the second elastic member 5 to the support sleeve 6, the main valve spool 2, under the action of the opening force, may push the support sleeve 6 to displace upward together and compress the second elastic member 5. That is, the through-flow cross-sectional area of the first flow path may gradually expand, and the main valve may be in an overflow state. Then, when the support sleeve 6 and the main valve spool 2 are displaced upward together to abut against the regulating rod 4, and the opening force is less than or equal to the position holding force of the regulating rod 4, under the action of the regulating rod 4, the main valve spool 2 may be maintained at a position adjusted by the regulating rod 4. That is, the through-flow cross-sectional area of the first flow path may be maintained at a value adjusted by the regulating rod 4, and the main valve may be in the throttling state again. Then, when the opening force is greater than the position holding force of the regulating rod 4, the main valve spool 2, under the action of the opening force, may push the support sleeve 6 and the regulating rod 4 to displace upward together continuously. That is, the through-flow cross-sectional area of the first flow path may gradually expand again, and the main valve may be again in the overflow state. Finally, the regulating rod 4, the support sleeve 6, and the main valve spool 2 may be prevented by the valve body 200 from continuing to displace upward. That is, the through-flow cross-sectional area of the first flow path may stop expanding, and the main valve may be again in the throttling state.

As shown in FIG. 6 and indicated by the solid-line oil flowing paths n1 and n2, the operating process of the auxiliary valve may be the same as that of the second embodiment, which will not be repeated herein.

When the port M is configured as an oil inlet and the port N is configured as an oil outlet, as shown in FIG. 6 and indicated by the dotted-line oil flowing path m2, the operating process of the main valve will be described below. Firstly, the oil may enter the second oil passage of the damper valve from the port M. Since the main valve is in a normally-open state initially, the oil may exit the damper valve from the port N sequentially through the second passage 601, the first flow path, the first side cavity 103, the first passage 102, the control cavity 703, the inner cavity 801, the oil through hole 802, the outer cavity 702, and the first oil passage.

Since the oil flowing through the first flow path into the first side cavity 103 may experience a pressure drop, the oil pressure outside the first side cavity 103 may be greater than that inside the first side cavity 103, thereby generating a pressure difference. A closing force for downward displacement of the main valve spool 2 may be generated by the operating cross-section S under the action of the pressure difference. Firstly, when the closing force is less than or equal to the elastic force applied by the first elastic member 3 to the main valve spool 2, the main valve spool 2 may be maintained at an initial position under the elastic force of the first elastic member 3. That is, the through-flow cross-sectional area of the first flow path may be maintained at an initial value, and the main valve may be in the throttling state. Then, when the closing force is greater than the elastic force applied by the first elastic member 3 to the main valve spool 2, the main valve spool 2 may be displaced downward under the action of the closing force, compressing the first elastic member 3. Since the through-flow cross-sectional area of the first flow path may be decreased when the main valve spool 2 is displaced downward, so that the pressure difference and the closing force may be continuously increased. Therefore, the main valve spool 2 may continue to be displaced downward under the continuously increasing closing force until the boss structure 2011 of the main valve spool 2 abuts against the upper end of the mounting bore 101. At this time, the oil entering from the port M cannot flow into the first side cavity 103, and the main valve may be in the closed state.

As shown in FIG. 6 and indicated by the dotted-line oil flowing paths m1 and m2, the operating process of the auxiliary valve will be described below. Since the oil flowing through the first flow path into the control cavity 703 may undergo a pressure drop, the oil in the control cavity 703 can flow out from the oil through hole 802 via the inner cavity 801. When the oil enters the second side cavity 704 from the port M, the oil pressure inside the second side cavity 704 may be greater than that inside the control cavity 703, thereby generating a pressure difference. An opening force for upward displacement of the auxiliary valve spool 8 may be generated by the auxiliary valve spool 8 under the action of the pressure difference. As the pressure of the oil entering from the port M is gradually increased, the pressure difference and the opening force may be gradually increased. When the opening force is less than or equal to the elastic force applied by the third elastic member 9 to the auxiliary valve spool 8, the auxiliary valve spool 8, under the elastic force of the third elastic member 9, may maintain the abutting between the bottom of the auxiliary valve spool 8 and the support platform 701. Consequently, the oil in the second side cavity 704 cannot flow to the outer cavity 702, and the auxiliary valve may be in a closed state. When the opening force is greater than the elastic force applied by the third elastic member 9 to the auxiliary valve spool 8, the auxiliary valve spool 8 may be displaced upward under the action of the opening force, compressing the third elastic member 9. At this time, the bottom of the auxiliary valve spool 8 may be gradually separated from the support platform 701, forming a second flow path. The oil may flow from the second side cavity 704 to the outer cavity 702 via the second flow path, and the auxiliary valve may be in the overflow state. When the auxiliary valve spool 8 is displaced upward to a preset position and stops moving, the auxiliary valve may be in the throttling state. Finally, the oil may exit the damper valve from the port N through the first oil passage.

### The fourth embodiment

As shown in FIG. 7 and FIG. 8, the difference between the fourth embodiment and the second embodiment is in that the first elastic member 3 is disposed at a different position. In the fourth embodiment, the first elastic member 3 may be disposed between the main valve sleeve 1 and the main valve spool 2. One end of the first elastic member 3 may abut against the main valve spool 2, and another end of the first elastic member 3 may abut against the main valve sleeve 1.

Initially, the main valve spool 2 may be displaced upward under the elastic force of the first elastic member 3 to enable the upper portion of the main valve spool 2 to abut against the regulating rod 4. Thus, an initial gap between the boss structure 2011 of the main valve spool 2 and the upper end of the mounting bore 101 may form a first flow path, and the main valve may be in a normally-open state.

During operation, when the port N is configured as an oil inlet and the port M is configured as an oil outlet, as shown in FIG. 8 and indicated by the solid-line oil flowing path n2, the operation process of the main valve will be described below. Firstly, the oil may enter the first oil passage of the damper valve from the port N. Since the main valve is in a normally-open state initially, the oil may exit the damper valve from the port M sequentially through the outer cavity 702, the oil through hole 802, the inner cavity 801, the control cavity 703, the first passage 102, the first side cavity 103, the first flow path, and the second oil passage.

Since the oil flowing from the first side cavity 103 through the first flow path may experience a pressure drop, the oil pressure inside the first side cavity 103 may be greater than that outside the first side cavity 103, thereby generating a pressure difference. An opening force for upward displacement of the main valve spool 2 may be generated under the action of the pressure difference. Firstly, when the opening force is less than or equal to the position holding force of the regulating rod 4, under the action of the regulating rod 4, the main valve spool 2 may be maintained at a position regulated by the regulating rod 4. That is, a through-flow cross-sectional area of the first flow path may be maintained at a regulated value, and the main valve may be in a throttling state as regulated by the regulating rod 4. Then, when the opening force is greater than the position holding force of the regulating rod 4, the main valve spool 2, under the action of the opening force, may push the regulating rod 4 to displace upward together. That is, the through-flow cross-sectional area of the first flow path may gradually enlarge, and the main valve may be in an overflow state as regulated by the regulating rod 4. Finally, the regulating rod 4 and the main valve spool 2 may be prevented by the valve body 200 from continuing to displace upward. That is, the through-flow cross-sectional area of the first flow path may stop expanding, and the main valve may be in the throttling state again. When the designed area of the operating section S is equal to zero, the opening force and the closing force may be always equal to zero. The main valve spool 2 may not be displaced due to changes in oil pressure and direction of oil flow. Under the combined action of the first elastic member 3 and the regulating rod 4, the main valve spool 2 may be always maintained at a position regulated by the regulating rod 4. That is, the main valve spool 2 and the main valve sleeve 1 may be always in the throttling state as regulated by the regulating rod 4.

As shown in FIG. 8 and indicated by the solid-line oil flowing paths n1 and n2, the operating process of the auxiliary valve may be the same as that of the second embodiment, which will not be repeated herein.

When the port M is configured as an oil inlet and the port N is configured as an oil outlet, as shown in FIG. 8 and indicated by the dotted-line oil flowing path m2, the operating process of the main valve will be described below. Firstly, the oil may enter the second oil passage of the damper valve from the port M. Since the main valve is in a normally-open state initially, the oil may exit the damper valve from the port N sequentially through the first flow path, the first side cavity 103, the first passage 102, the control cavity 703, the inner cavity 801, the oil through hole 802, the outer cavity 702, and the first oil passage.

Since the oil flowing through the first flow path into the first side cavity 103 may undergo a pressure drop, the oil pressure outside the first side cavity 103 may be greater than that inside the first side cavity 103, thereby generating a pressure difference. A closing force for downward displacement of the main valve spool 2 may be generated by the operating cross-section S under the action of the pressure difference. Firstly, when the closing force is less than or equal to the elastic force applied by the first elastic member 3 to the main valve spool 2, the main valve spool 2 may be maintained at a position regulated by the regulating rod 4 under the elastic force of the first elastic member 3. That is, the through-flow cross-sectional area of the first flow path may be maintained at a regulated value, and the main valve may be in a throttling state as regulated by the regulating rod 4. Then, when the closing force is greater than the elastic force applied by the first elastic member 3 to the main valve spool 2, the main valve spool 2 may be displaced downward under the action of the closing force, compressing the first elastic member 3. Since the through-flow cross-sectional area of the first flow path may be decreased when the main valve spool 2 is displaced downward, so that the pressure difference and the closing force may be continuously increased. Therefore, the main valve spool 2 may continue to be displaced downward the continuously increasing closing force until the boss structure 2011 of the main valve spool 2 abuts against the upper end of the mounting bore 101. At this time, the oil entering from the port M cannot flow into the first side cavity 103, and the main valve may be in the closed state.

As shown in FIG. 8 and indicated by the dotted-line oil flowing paths m1 and m1, the operating process of the auxiliary valve may be the same as that of the third embodiment, which will not be repeated herein.

### The fifth embodiment

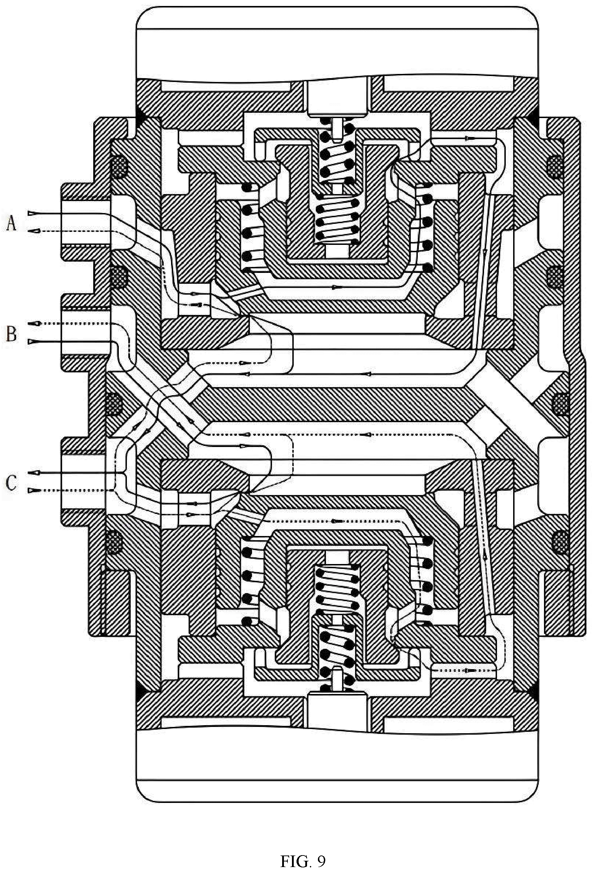

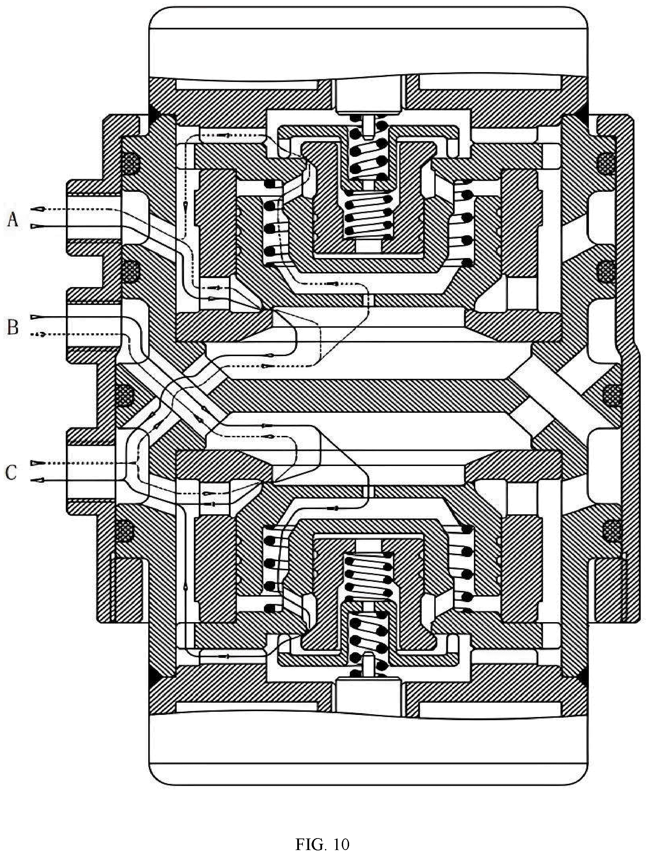

Based on the first to fourth embodiments, two damper valve assemblies 100 are provided in the fifth embodiment. The two damper valve assemblies 100 may be arranged symmetrically in an up-down manner within the damper valve. The two damper valve assemblies 100 may be connected via the valve body 200 and in communication with each other via the oil passage 210 on the valve body 200. In the present embodiment, the two damper valve assemblies 100 may share one valve body 200. The oil passage 210 on the valve body 200 may include a first oil passage, a second oil passage, and a third oil passage. The first oil passage, the second oil passage, and the third oil passage may be in communication with a port A, a port B, and a port C, respectively. As shown in FIG. 9, the port A, the port B, and the port C may be in communication with the rod cavity of the shock absorber, the liquid storage barrel and the non-rod cavity of the shock absorber, respectively. As shown in FIG. 10 to FIG. 12, the port A, the port B, and the port C may be in communication with the liquid storage barrel, the rod cavity of the shock absorber, and the non-rod cavity of the shock absorber, respectively. As shown in FIGs. 9 to 12, the solid-line oil flowing paths may represent oil flowing path during extension of the shock absorber, and the dashed-line oil flowing paths may represent oil flowing paths during compression of the shock absorber, which may be illustrated by FIG. 9 below.

The structure shown in FIG. 9 may be corresponding to a structure where the two damper valve assemblies 100 in the first embodiment are symmetrically arranged in the up-down manner. When the shock absorber performs the extension motion, as shown by solid-line oil flowing paths in FIG. 9, the oil may enter the first oil passage and the second oil passage from the port A and the port B, respectively, and may flow from the third oil passage to the port C. After the oil flows from the oil passage 210 into the damper valve assembly 100, the operating principle may be consistent with that described in the first embodiment, which will not be repeated herein. It should be further noted that, due to the presence of the rod of the piston-rod assembly in the rod cavity, the operating cross-sectional area of the piston in the rod cavity may be less than that in the non-rod cavity. During the extension of the shock absorber, the volume decrease in the rod cavity may be less than the volume increase in the non-rod cavity. Therefore, the amount of the oil discharged from the rod cavity may be insufficient to fill the non-rod cavity, and the oil in the liquid storage barrel can be simultaneously supplemented to the non-rod cavity.

When the shock absorber performs compression motion, as shown by the dotted-line oil flowing paths in FIG. 9, the oil may enter the third oil passage from the port C and flow from the first oil passage and the second oil passage to the port A and the port B, respectively. After the oil flows from the oil passage 210 into the damper valve assembly 100, the operating principle may be consistent with that described in the first embodiment, which will not be repeated herein. It should be further noted that, due to the presence of the rod of the piston-rod assembly in the rod cavity, the operating cross-sectional area of the piston in the non-rod cavity may be greater than that in the rod cavity. During the compression of the shock absorber, the volume decrease in the non-rod cavity may be greater than the volume increase in the rod cavity. Therefore, the oil discharged from the non-rod cavity may fill the rod cavity while a portion of the oil may overflow, and the overflowed oil may flow into the liquid storage barrel.

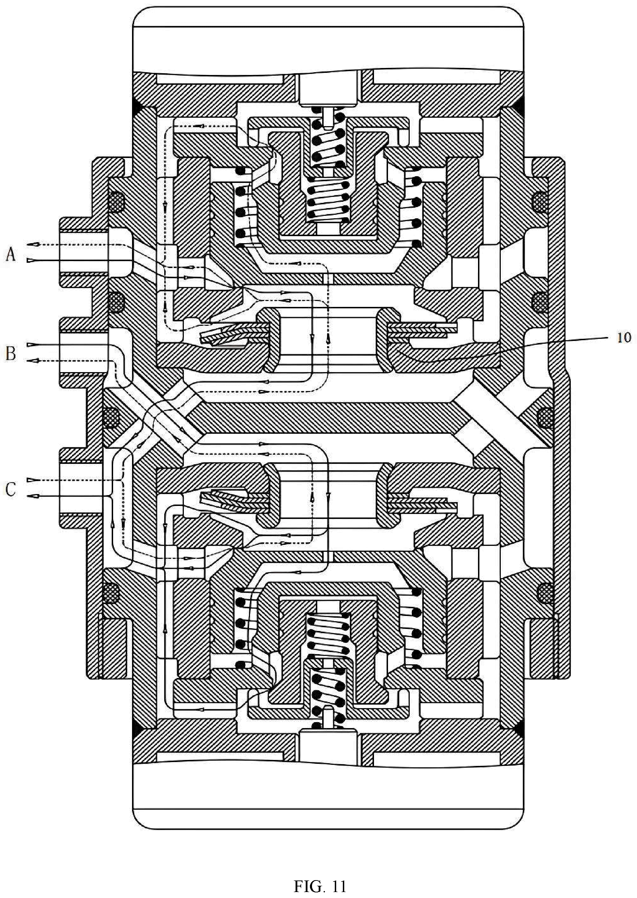

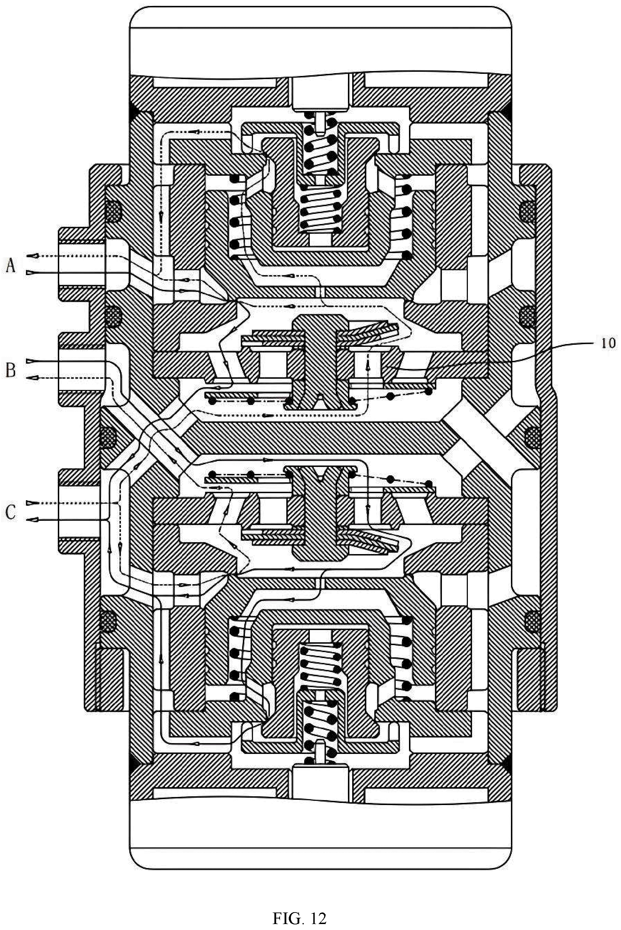

As shown in FIG. 11 and FIG. 12, each of the two damper valve assemblies 100 may be provided with a disc valve 10 correspondingly. Specifically, the disc valve 10 may be located in the second oil passage and the third oil passage. The disc valve 10 may serve to provide throttling and overflow functions. When the oil pressure is relatively low, the oil may directly flow through the orifice of the disc valve 10. When the oil pressure is relatively high, a valve plate of the disc valve 10 may be displaced or elastically deformed to one side under the action of the oil pressure, so that the valve plate may be gradually separated from a sealing surface to form a through-flow gap. Then, the oil may flow through the orifice and the through-flow gap simultaneously. When the oil pressure is decreased or subjected to reverse oil pressure, the valve plate may return to a preset position under the action of the reset elastic member, or its own material elasticity, or the reverse oil pressure, so that the valve plate may abut against the sealing surface. Simultaneously, the disc valve 10 may also function to prevent accidents in the event of a failure or malfunction of the damper valve assembly 100. When a malfunction such as the damper valve assembly 100 becoming stuck and failing to open, or a fault such as blockage occurs in the damper valve assembly 100, obstructing the oil passage, the disc valve 10 can guide the incoming oil out of the valve body 200. In the event that the damper valve assembly 100 becomes stuck and fails to reset or suffers other malfunctions causing the damper valve assembly 100 to lose throttling and overflow functions, the disc valve 10 may provide basic throttling and overflow functionality.

It should be further noted that when the flow rate or pressure of the oil entering from the oil inlet port changes, the damper valve assembly 100 in the damper valve may be in a corresponding operating state. A corresponding back pressure may be generated in the circuit in an operating state of each stage of the main valve. A corresponding damping force may be generated by the operating cross-section of the piston of the shock absorber under the action of the back pressure. That is, a corresponding damping force may be generated by the shock absorber at each speed range during the extension or compression motion.

In addition, in the present disclosure, descriptions involving terms such as "first", "second" are merely used for description purposes, and are not to be understood as indicating or implying relative importance or implicitly specifying the quantity of the indicated technical features. Thus, features defined by "first" and "second" may explicitly or implicitly include at least one of the features. In the description of the present disclosure, the term "a plurality of" means at least two, for example, two, three, and the like, unless otherwise explicitly and specifically defined otherwise.

In the present disclosure, unless otherwise explicitly specified and defined, terms such as "connected", "fixed" and the like should be interpreted broadly. For example, "fixed" may indicate a fixed connection, a detachable connection, or an integrated connection; may indicate a mechanical connection, or an electrical connection; may indicate a direct connection, or may indicate an indirect connection through an intermediate medium, or may indicate an internal communication between two elements or an interaction relationship between two elements, unless otherwise explicitly defined. For those skilled in the art, the specific meanings of the above terms in the present disclosure may be understood according to specific situations.

Moreover, the technical solutions among various embodiments of the present disclosure may be combined with each other. However, such combination must be feasible for those skilled in the art. If the combination of the technical solutions results in contradictions or is infeasible, it should be considered that such a combination of the technical solutions does not exist and is not within the protection scope claimed by the present disclosure.

## Claims

1. A damper valve, comprising a damper valve assembly and a valve body, wherein the valve body is provided with an oil passage for oil inlet and outlet, **characterized in that** the damper valve assembly comprises a main valve sleeve, a main valve spool, and a first elastic member, wherein
the main valve sleeve is provided with a mounting bore, an upper end of the mounting bore is provided with an opening, a side wall of the mounting bore is provided with a first passage, and the first passage is in communication with the oil passage;
the main valve spool is inserted in the mounting bore of the main valve sleeve, the main valve spool is movable along an axial direction of the main valve sleeve, a gap formed between the main valve spool and the opening of the mounting bore is configured as a first flow path, the first flow path is in communication with the first passage, and the main valve spool is further provided with a through hole, a first side cavity is formed between the main valve spool and an inner wall of the mounting bore, the first passage is in communication with the first side cavity; and
the first elastic member is configured to apply an elastic force to the main valve spool along an axial direction of the main valve spool.

2. The damper valve of claim 1, wherein an upper portion of the main valve spool, urged by the first elastic member, abuts against the main valve sleeve so as to close the opening of the mounting bore, or is displaced away from the opening of the mounting bore so as to open the opening of the mounting bore.

3. The damper valve of claim 2, wherein the upper portion of the main valve spool has a boss structure, the boss structure extends out of the mounting bore, and when the main valve spool is displaced downward to a preset position, the boss structure abuts against the upper end of the mounting bore and closes the opening of the mounting bore.

4. The damper valve of claim 3, wherein either or both of a first groove and a second groove are formed; the first groove is formed by an upper portion of the inner wall of the mounting bore being recessed outward, the second groove is formed by an outer wall of the main valve spool being recessed inward, and
the first groove and the second groove are enclosed to form the first side cavity, or the first groove is configured as the first side cavity, or the second groove is configured as the first side cavity.

5. The damper valve of claim 1, wherein the main valve spool is disposed between the main valve sleeve and a regulating assembly, and the regulating assembly comprises a regulating rod disposed above the main valve spool.

6. The damper valve of claim 5, wherein the first elastic member is located between the main valve spool and the regulating rod, one end of the first elastic member abuts against the main valve spool, and another end of the first elastic member abuts against the regulating rod.

7. The damper valve of claim 5, wherein the regulating assembly further comprises a support sleeve movably disposed above the main valve spool and a second elastic member, the first elastic member is located between the main valve spool and the support sleeve, one end of the first elastic member abuts against the main valve spool, another end of the first elastic member abuts against a lower end surface of the support sleeve, the second elastic member is located between the support sleeve and the regulating rod, one end of the second elastic member abuts against an upper end surface of the support sleeve, another end of the second elastic member abuts against the regulating rod, the second elastic member is configured to apply an elastic force to the support sleeve along an axial direction of the support sleeve, the support sleeve is provided with a second passage configured to make the first flow path and the oil passage in communication with each other, the main valve spool abuts against the support sleeve when the main valve spool is displaced upward to a preset position, the main valve spool is configured to drive the support sleeve to displace upward, the main valve sleeve is provided with a stepped section extending to the upper end of the mounting bore, and a lower end of the support sleeve abuts against the stepped section after the support sleeve is displaced downward to another preset position.

8. The damper valve of claim 5, wherein the regulating assembly further comprises a support sleeve movably disposed above the main valve spool and a second elastic member, the first elastic member is located between the main valve spool and the main valve sleeve, one end of the first elastic member abuts against the main valve spool, another end of the first elastic member abuts against the main valve sleeve, the second elastic member is located between the support sleeve and the regulating rod, one end of the second elastic member abuts against an upper end surface of the support sleeve, another end of the second elastic member abuts against the regulating rod, the second elastic member is configured to apply an elastic force to the support sleeve along an axial direction of the support sleeve, the support sleeve is provided with a second passage configured to make the first flow path and the oil passage in communication with each other, the main valve spool abuts against the support sleeve, the main valve spool is configured to drive the support sleeve to displace upward, the main valve sleeve is provided with a stepped section extending to the upper end of the mounting bore, and a lower end of the support sleeve abuts against the stepped section after the support sleeve is moved downward to a preset position.

9. The damper valve of claim 5, wherein the first elastic member is located between the main valve spool and the main valve sleeve, one end of the first elastic member abuts against the main valve spool, another end of the first elastic member abuts against the main valve sleeve, and an upper end surface of the main valve spool is capable of abutting against the regulating rod.

10. The damper valve of claims 7 or 8, wherein an inner wall of the support sleeve is recessed upward to form an outer movable cavity, the boss structure is located in the outer movable cavity, the boss structure is displaced upward to abut against a bottom of the outer movable cavity, and when the boss structure is displaced downward to abut against the upper end of the mounting bore, a gap is formed between the boss structure and the inner wall of the outer movable cavity.

11. The damper valve of claims 7 or 8, wherein a middle part of the support sleeve is recessed downward to form an inner movable cavity, and the second elastic member is disposed between a bottom of the inner movable cavity and the regulating rod.

12. The damper valve of claims 7 or 8, wherein the second passage is provided at a periphery of the support sleeve at a position where the support sleeve abuts against the stepped section.

13. The damper valve of claim 1, wherein the first elastic member is configured as a spring.

14. The damper valve of claims 7 or 8, wherein the second elastic member is configured as a spring.

15. The damper valve of any one of claims 6 to 9, wherein a lower outer wall of the main valve spool and the inner wall of the mounting bore are sealed against each other.

16. The damper valve of claim 15, wherein the lower outer wall of the main valve spool and the inner wall of the mounting bore are sealed by a first sealing member, and the first sealing member comprises a sealing ring.

17. The damper valve of any one of claims 6 to 9, wherein the damper valve assembly further comprises a third elastic member, an auxiliary valve spool, and an auxiliary valve sleeve, the auxiliary valve spool is disposed in the auxiliary valve sleeve, the auxiliary valve spool is movable along an axial direction of the auxiliary valve sleeve, the auxiliary valve spool is disposed below the main valve sleeve, the third elastic member is disposed between the auxiliary valve spool and the main valve sleeve, the third elastic member is configured to apply an elastic force to the auxiliary valve spool along an axial direction of the auxiliary valve spool, a support platform is inwardly protruded from a lower portion of an inner wall of the auxiliary valve sleeve, the auxiliary valve spool abuts against the support platform under an action of the third elastic member, and a lower end surface of the auxiliary valve spool, the support platform and the valve body are enclosed to form an outer cavity.

18. The damper valve of claim 17, wherein the inner wall of the auxiliary valve sleeve, an outer wall of the main valve sleeve, and an upper end surface of the auxiliary valve spool are enclosed to form a control cavity, a middle part of the auxiliary valve spool is recessed downward to form an inner cavity, a lower part of the main valve sleeve is disposed in the inner cavity, and the inner cavity is in communication with the control cavity.

19. The damper valve of claim 18, wherein the inner wall of the auxiliary valve sleeve, the auxiliary valve spool, and the support platform are enclosed to form a second side cavity, the auxiliary valve sleeve is provided with a third passage, the second side cavity is in communication with the oil passage via the third passage, the auxiliary valve spool is further provided with an oil through hole, the oil through hole is located on a side surface of the auxiliary valve spool or a bottom surface of the auxiliary valve spool, when the oil through hole is located on the side surface of the auxiliary valve spool, the oil through hole is in communication with the inner cavity and the second side cavity; when the oil through hole is located on the bottom surface of the auxiliary valve spool, the oil through hole is in communication with the inner cavity and the outer cavity.

20. The damper valve of claim 19, wherein the auxiliary valve sleeve is further provided with a fourth passage in communication with the oil passage.

21. The damper valve of claim 20, wherein an outer side wall of the auxiliary valve spool and the inner wall of the auxiliary valve sleeve are sealed against each other.

22. The damper valve of claim 21, wherein the outer side wall of the auxiliary valve spool and the inner wall of the auxiliary valve sleeve are sealed by a second sealing member, and the second sealing member comprises a sealing ring.

23. The damper valve of claim 17, wherein the third elastic member is configured as a spring.

24. The damper valve of claim 1, wherein two damper valve assemblies are provided in the damper valve, and the two damper valve assemblies are in communication with each other via the valve body.

25. The damper valve of claim 24, wherein the oil passage of the valve body is provided with a disc valve.

26. A hydraulic damper, comprising a shock absorber and the damper valve of claim 1, wherein the shock absorber is in communication with the damper valve.
